(19) **Europäisches Patentamt**
**European Patent Office**
**Office européen des brevets**

(11) **EP 1 448 840 B1**

(12) **EUROPEAN PATENT SPECIFICATION**

(45) Date of publication and mention
of the grant of the patent:
**10.01.2007 Bulletin 2007/02**

(51) Int Cl.:
*D06M 16/00* (2006.01)     *D06M 101/06* (2006.01)
*D06M 15/03* (2006.01)     *C12N 9/10* (2006.01)
*C08B 37/00* (2006.01)

(21) Application number: **02777717.6**

(22) Date of filing: **16.10.2002**

(86) International application number:
**PCT/IB2002/004567**

(87) International publication number:
**WO 2003/033813 (24.04.2003 Gazette 2003/17)**

(54) **METHOD FOR THE MODIFICATION OF POLYMERIC CARBOHYDRATE MATERIALS**

VERFAHREN ZUM MODIFIZIEREN VON POLYMEREN KOHLENHYDRATMATERIALIEN

PROCEDE DE MODIFICATION DE SUBSTANCES GLUCIDIQUES POLYMERES

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **16.10.2001 SE 0103446
16.10.2001 SE 0103447
23.07.2002 SE 0202310**

(43) Date of publication of application:
**25.08.2004 Bulletin 2004/35**

(73) Proprietor: **SWETREE TECHNOLOGIES AB
907 19 Umea (SE)**

(72) Inventors:
• **TEERI, Tuula, T.
S-183 56 Täby (SE)**
• **BRUMER, Harry
S-121 46 Johanneshov (SE)**

(74) Representative: **Plougmann & Vingtoft A/S
Sundkrogsgade 9
P.O. Box 831
2100 Copenhagen Ø (DK)**

(56) References cited:
**WO-A1-01/07556          WO-A1-97/07203
WO-A1-97/23683          US-A- 5 961 783**

• **ZDENA SULOVA ET AL.: 'Purification of xyloglucan endotransglyclosylase based on affinity sorption of the active glycosyl-enzyme intermediated complex to cellulose' PROTEIN EXPRESSION AND PURIFICATION vol. 16, 1999, pages 231 - 235, XP002960590**
• **TAKAHISA HAYASHI ET AL.: 'Characterization of the adsorption of xyloglucan to cellulose' PLANT CELL. PHYSIOL. vol. 35, no. 8, 1994, pages 1199 - 1205, XP002960591**

**Description**

FIELD OF THE INVENTION

The present invention relates to a chemo-enzymatic method for the modification of polymeric carbohydrate materials, in particular to utilize an activated polymer interface to introduce specific chemical groups onto the surface of any polymeric carbohydrate material to alter the physico-chemical properties of said material, as well as materials produced by this method and products comprising these materials.

TECHNICAL BACKGROUND AND PRIOR ART

Virtually all cellulose materials used in the paper and board and textile industries are chemically treated to alter the surface properties of these materials, either before (e.g. wood pulp, cotton thread, etc.) or after formation of the product in its final three-dimensional form (e.g. paper sheets, corrugated cardboard, woven fabrics, etc). Treatment of cellulose materials with chemical additives at various points in the manufacturing process leads to dramatic changes in fibre surface properties. For example, carboxymethylcellulose, an anionic cellulose derivative, is added to wood pulps to increase the retention of commonly used cationic fillers and sizing agents.
Similarly, organic sizing agents such as alkyl ketene dimer and alkyl succinic anhydride are added during paper sheet formation to increase hydrophobicity and effect sheet printability. In the use of cellulose materials as packaging agents for liquids and foodstuffs, paper and cardboard are often laminated with a thermoplastic, such as polyethylene to provide an impermeable barrier to aqueous solutions. Both textiles and paper sheets are routinely dyed or printed upon, which is yet another example of surface modification. Much of current technology in security papers and packaging (bank notes, traceable documents and packages) relies upon surface treatments with specific chemicals, which can be later analysed to determine authenticity. Furthermore, cellulosic materials have great potential in the polymer industry for a wide range of applications, such as fillers, laminates and panel products, wood-polymer composites, polymer composites, alloys and blends, and cellulose derivates (cellulosics).
However, owing to some bottlenecks in their manufacture or performance, the use of such composites is still limited. In recent years, the demand has risen for surface-modified fillers that improve the properties of the virgin polymer and reduce the cost or the weight of finished products. Optimization of the interfacial bond between fibre and polymer matrix is an important aspect with respect to optimal mechanical performance and durability of fibre reinforced composites. The quality of the fibre-matrix interface is significant for the application of natural fibres as reinforcement for plastics. Since the fibres and matrices are chemically different, strong adhesion at their interfaces is needed for an effective transfer of stress and bond distribution throughout an interface. New methods for the derivatization of cellulose are thus needed in order to improve the fibre-matrix adhesion for polymer processing, adhesives and novel composite materials.
The currently available technology for cellulose fibre surface modification by physical and chemical treatments lacks a high degree of control in the manner by which agents are introduced onto the fibre surface. A particularly serious shortcoming of direct chemical modification of cellulose is that most chemicals penetrate into the fibre structure and the chemical modifications occurring inside the fibres lead to loss of fibre structure and properties. As catalysts, enzymes are highly specific in their mode of action, and therefore offer an attractive alternative to traditional methods. In addition, the proteinaceous nature of these catalysts means that they are readily biodegradable and environmentally friendly. Furthermore, enzymes are naturally surface acting thus overcoming the problem of penetration into the fibre structure.
Degrading enzymes, which catalyse the breakdown of their substrates by the cleavage of chemical bonds, have received increasing attention over the past 15 years for the treatment of cellulose materials, most notably in the pulp and paper industry. For example, ligninases are used to improve the bleachability and brightness of pulps by removal of lignin, while xylanase treatment facilitates the removal of re-precipitated lignin during the cooking process. Similarly, cellulases are used extensively in the textile industry to effect garment finish. For example, cellulase treatment of denim has largely replaced mechanical tumbling with pumice stones to create so-called "stone-washed" effects. Cellulases are also a key ingredient in a number of laundry detergents, where they act as depilling agents by enzymatically trimming frayed cotton fibres.
Despite the widespread use of degrading enzymes in cellulose fibre modification, the use of enzymes, which operate in the opposite direction, i.e. the synthetic direction, is little developed. This is largely because comparatively little is known about the enzymes responsible for the synthesis of polysaccharides such as cellulose and hemicellulose. The majority of these enzymes, known as nucleotide sugar-dependent transferases, are cell membrane-bound, which makes their isolation and characterisation difficult. In addition, the preparation of the activated sugars is expensive. The use of nucleotide sugar-dependent transferases in cellulose fibre modification is further limited by the fact that chemical modification of the sugar ring of the natural substrates, which are ultimately incorporated into the growing polysaccharide chain, is not tolerated. Aside transferases, glycosyl hydrolases using a retaining reaction mechanism, such as certain β-glucosidases or cellulases, can also be used for carbohydrate synthesis if water is excluded from the reaction mixture.

When operated in organic solvents these enzymes catalyze transglycosylation reactions leading to formation rather than degradation of glycosidic bonds.

However, the need to use organic solvents is a significant drawback of this method. Further, retaining glycosidases can be genetically engineered to remove their catalytic nucleophile. Such an enzyme can not form a covalent enzyme-substrate intermediate required for hydrolysis but can instead catalyse condensation of appropriate acceptor and donor sugars together if the donor sugar is fluorinated to mimic the transition state of the reaction. As with the nucleotide-dependent glycosyl transferases, the drawback is the need of activated substrates, which will limit the use of the technology in large scale applications.

Thus, there is a need to develop processes for the introduction of a wide range of chemical groups with different functionalities on polymer carbohydrate materials and in particular on cellulose fibres without compromising the intactness of the fibre structure. Ideally, the process should involve one or more enzymes, which are devoid of hydrolytic or other degradative activity since this would work against any attempts to append chemical groups to the fibres.

EP 562 832 discloses a gene coding for an endo-xyloglucan transferase and suggested this gene for use in regulating the morphology of a plant. The disclosure also mentions a method of transferring xyloglucan molecules which comprises splitting a D-glucosyl linkage in a xyloglucan molecule by using an endoglucan transferase and linking the resultant reducing end of xyloglucan molecular segment to D-glucose of the non-reducing end of another xyloglucan molecule. Repeating this a number of times, xyloglucan molecules of an arbitrary structure can be constructed, which is said to be applicable to the synthesis of chimeric polysaccharides.

U.S. 5,968,813 (a continuation of PCT/DK96/00538, published as WO 97/23683) discloses a process for improving the strength properties of cellulose materials, according to which a cellulose material is contacted with a xyloglucan endotransglycosylase (XET) in an aqueous medium. The XET treatment is believed to increase cross-linking between the cellulose fibres, thus improving the strength and/or shape retention of the cellulose material.

SUMMARY OF THE INVENTION

The present invention relates to method of modifying a polymeric carbohydrate material (PCM), the method comprising a step of binding a chemical group having a desired functionality to said carbohydrate material by means of a carbohydrate linker molecule carrying the chemical group and comprising a soluble carbohydrate polymer (SCP) comprising a hemicellulose, said linker molecule is capable of binding to the PCM.

In one embodiment of the method comprises the steps of providing a carbohydrate polymer fragment (CPF) comprising a chemical group having a desired functionality, which typically could be hydrofobic, charged, reactive. The CPF is brought into contact with a soluble carbohydrate polymer (SCP) under conditions which lead to the formation of a complex between the CPF and at least a part of the SCP. The PCM is finally modified by letting the SCP bind to the PCM.

The present invention further relates to materials and compositions created by the method and to materials and compositions comprising the complex of the PCM and a SCP comprising a chemical group having a desired functionality.

DETAILED DESCRIPTION OF THE INVENTION

The present invention relates to a method of modifying a polymeric carbohydrate material (PCM), the method comprising a step of binding a chemical group having a desired functionality to said carbohydrate material by means of a carbohydrate linker molecule comprising the chemical group and comprising a soluble carbohydrate polymer (SCP) comprising a hemicellulose, said carbohydrate linker molecule is capable of binding to the PCM.

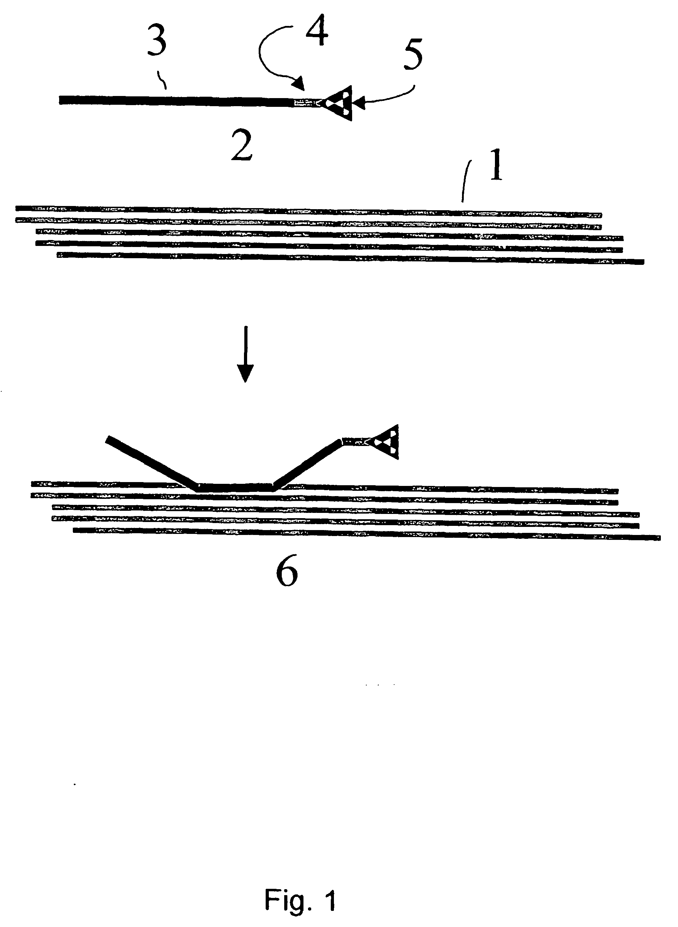

An embodiment of this method is illustrated in Figure 1, showing the unmodified PCM (1), and the carbohydrate linker molecule (CLM) (2), said CLM (2) comprising at least a part of a SCP (3), and a chemical group (5) and optionally complexed with a carbohydrate polymer fragment (CPF) (4) comprising the chemical group. Because the carbohydrate linker molecule is capable of binding to the PCM, binding will occur when the PCM are brought in contact.

In another embodiment of the invention the method comprises the steps of

(i) providing a carbohydrate polymer fragment (CPF) comprising a chemical group having a desired functionality,
(ii) bringing said CPF comprising the chemical group into contact with a soluble polymeric carbohydrate (SCP) under conditions leading to the formation of a complex consisting of said CPF comprising the chemical group, and the SCP, said CPF and SCP together forming the carbohydrate linker molecule (CLM), and
(iii) contacting said CLM with the PCM to be modified under conditions where the CLM binds to the PCM to obtain the modified polymeric carbohydrate material.

The term "polymeric carbohydrate materials" which is abbreviated "PCM" relates to a material that comprises a water-insoluble polymeric carbohydrate material and/or a watersoluble polymeric carbohydrate material. The PCM may be any material, which wholly or partly is made up of repeating units of one or more monosaccharides. Such PCMs are often composites with two or more different types of polymeric carbohydrates or a carbohyrdate polymer and another polymers such as protein. The PCM may comprise a chitin, which is a polymer of N-acetylglucosamine, which often forms complexes with proteins or other polysaccharides such as mannan.

The PCM may also comprise cellulose. Cellulose may be a homopolymer of β-1,4-linked glucose units. The long homopolymers of glucose (e.g. 8-15000 glucose units) stack onto one another by hydrogen bonds, thus forming an insoluble material. Such cellulose materials may be completely crystalline, or they may occur in disordered, amorphous form or they may be a mixture of the two. They may also be produced by first solubilizing the insoluble cellulose material and then regenerating it to form insoluble cellulose material of different chain organization (cellulose II).

Cellulose in the plant cell walls forms complexes with other, soluble cell wall polysaccharides such as hemicelluloses and pectin. Examples of PCMs comprising cellulose and/or cellulose/hemicellulose composites are cellulose fibres, cellulose microfibrils (whiskers), paper and pulp products and cellulose fabrics.

As will be apparent from the description and the examples, the term PCM relates to any structures in small polymers (e.g. dimensions less than one nm), large polymers (e.g. dimensions of 0.1 - 1000 nm), aggregates of polymers (e.g. dimensions of 1 - 10.000 nm), fibres (e.g. dimensions of 0.1-100.000 μm), aggregates of fibres (e.g. dimensions of 0.00001 - 1000 m).

The term "cellulosic fibre" relates to a plant cell consisting of an outer primary cell wall, which encapsulates a thicker and more complex secondary cell wall. The essential fibre component is cellulose, which is the load-bearing component of the plant cell walls. Depending on different pulping sequences, pulp fibres may or may not contain primary cell wall material. The term "cellulose microfibrils" relates to the elementrary units of cellulose crystals produced by plants or other organisms. Cellulose microfibrils can be prepared from cellulosic plant fibres, or more easily from cultures of cellulose synthesizing bacteria such as *Acetobacter xylinum* spp.

In the context of the present invention cellulose fibres may be extracted from an annual plant such as for example flax, hemp or cereals or perennial plant such as for example cotton, poplar, birch, willow, eucalyptus, larch, pine or spruce. Cellulose microfibrils can be obtained from bacterial cultures of e.g. *Acetobacter xylinum* spp. A paper or pulp product may be any cellulose-containing material known in the art. These include, but are not limited to materials such as wood or pulp fibres, different chemical pulps, mechanical and thermomechanical pulps, fluff pulps, filter papers, fine papers, newsprint, regenerated cellulose materials, liner boards, tissue and other hygiene products, sack and Kraft papers, other packaging materials, particle boards and fibre boards as well as surfaces of solid wood products or wood and fibre composites.

Further examples of the PCM comprise polymeric carbohydrate materials used in medical applications, such as membranes, gels, beads used in diagnostics or separation technology, and membranes used in electronic applications. The fibre product in the context of the present invention may also be a new type of composite with other natural or synthetic polymers or materials as well as electronic compounds.

In the context of the present invention a cellulose fabric is any cellulose-containing fabric known in the art, such as cotton, viscose, cupro, acetate and triacetate fibres, modal, rayon, ramie, linen, Tencel® etc., or mixtures thereof, or mixtures of any of these fibres, or mixtures of any of these fibres together with synthetic fibres or wool such as mixtures of cotton and spandex (stretch-denim), Tencel® and wool, viscose and polyester, cotton and polyester, and cotton and wool.

The term "soluble carbohydrate polymers" which is abbreviated (SCP), relates to polymers comprising one or more different monosaccharides or their derivatives, which can be dissolved in aqueous or organic solvents. Examples include polysaccharides classified as hemicelluloses (those carbohydrate polymers which are not composed only of β (1-4)-linked glucose units, i.e., cellulose), pectins (polyuronic acids and esters), and starches (α (1-4)-linked polyglucose with or without α (1-6) sidechain branching). Xyloglucan, which is a polysaccharide composed of a β(1-4)-linked polyglucose backbone decorated with α(1-6) xylose residues, which themselves can be further substituted with other saccharides such as fucose and arabinose, is an example of such a SCP, specifically a hemicellulose. In a preferred embodiment the SCP is capable of binding to the PCM, e.g. via one or more hydrogen bonds, ionic interaction, one or more covalent bonds, van der Waals forces or any combination of these. In an embodiment of the present invention the SPC may be a CPF according to the description below.

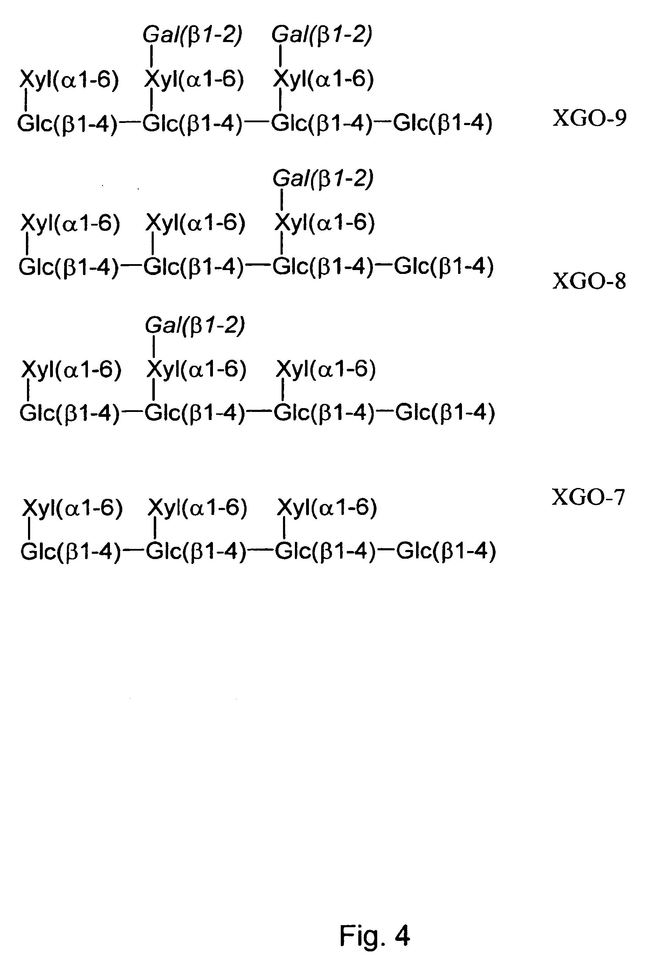

The term "carbohydrate polymer fragments" which is abbreviated "CPF" relates to molecules that may be enzymatically or chemically prepared fragments of the SCPs. Examples of such fragments comprise any number of the repeating units of said SCPs. Suitable fragments may thus contain from 2 to approximately 5000 monosaccharide units in the polymer backbone such as approximately 2-10, 4-10, 3-100, 11-15, 20-25, 26-40, 41-60, 61-100, 101-200, 201-300, 301-400, 401-500, 501-1000, 1001-2000, 2001-3000, 3001-4000 or 4001-5000 monosaccharide units. The CPF may further comprise side chains of different length and composition. Specific examples include but are not limited to xyglucoluco-oligosaccharides (XGO) such as of the structures described in Figure 4 or a fragment thereof, or as further modified with one or more fucosyl residues or other monosaccharides.

XGOs are commonly named according to the nomenclature system outlined in Fry et al. (1993) Physiologia Plantarum, 89, 1-3 where G represents an unsubstituted beta-glucopyranosyl residue, X represents a xylopyranosyl-alpha(1-6)-glucopyranosyl unit, L represents a galactopyranosyl-beta(1-2)-xylopyranosyl-alpha(1-6)-glucosyl unit, F represents a fucopyranosyl-alpha(1-2)-galactopyranosyl-beta(1-2)-xylopyranosyl-alpha(1-6)-glucosyl unit, among others. These various units may be connected via a beta(1-4) linkage between the glucopyranosyl units to form a beta(1-4)-glucan polysaccharide backbone. Using this nomenclature, the XGOs which are commonly isolated after endoglucanase digestion of tamarind xyloglucan are XXXG, XLXG, XXLG, and XLLG (see Figure 4). If the reducing-end glucose (G) of these oligosaccharides is in the reduced, alditol form, this unit is represented by "Gol". Thus, for example, the reduced (alditol) derivatives of the aforementioned oligosaccharides from tamarind xyloglucan are designated XXXGol, XLXGol, XXLGol, and XLLGol.

In the context of the present invention the term "chemical group" relates to any chemical radical (R-) group of potential interest for activation or modification of the insoluble polymeric carbohydrate surfaces. Activation of the insoluble polymeric carbohydrate surfaces is defined as a modification which will allow further chemical or enzymatic reactions to be carried out while modification of the surfaces is defined as a treatment which as such is sufficient to alter its functional properties.

Examples of chemical groups suitable for such activation or modification may include ionic groups (cationic, e.g. quaternary amino groups, ammonium groups, carbocations, sulfonium groups, or metal cations, etc.; anionic, e.g., alcoxides, thiolates, phosphonates, carbanions, carboxylates, boronates, sulfonates, Bunte salts, etc.; or zwitterionic, e.g., amino acids, ylides, or other combinations of anionic and cationic groups on the same molecule) or their unionised conjugate acids or bases (as appropriate), hydrophobic groups (alkyl hydrocarbons, e.g, fatty acyl or alkyl groups and unsaturated derivatives, or perfluoro alkanes; or aryl hydrocarbons, e.g., aromatic or polycyclic aromatic hydrocarbons or heterocycles), uncharged hydrophilic groups (e.g. polyethers, such as polyethylene glycol), potentially reactive groups such as those containing electrophilic atoms (e.g., carbonyl compounds, carbocations, alkyl halides, acetals, etc.), nucleophiles (e.g., nitrogen, sulfur, oxygen, carbanions, etc.), or monomers for polymerisation reactions (free radical, e.g., acrylamide, bromobutyrate, vinyl, styrene, etc.; or otherwise, e.g., nucleophilic or electrophilic reagents), chromophoric or fluorophoric groups (pigments, dyes, or optical brighteners, e.g., C.I. dyes, fluorescein, sulforhodamine, pyrene), biotin, radioactive isotopes, free-radical precursors and stable free radical moieties (e.g., TEMPO), nucleic acid sequences, amino acid sequences, proteins or protein-binding agents (e.g., affinity ligands, biotin, avidin, streptavidin, carbohydrates, antibodies, or enzyme substrates or their analogues), receptors, hormones, vitamins and drugs.

The term "carbohydrate linker molecules" which is abbreviated "CLM", relates to a molecule or complex which contains at least a part of a SCP according to the description above and a chemical group. In a preferred embodiment the CLM is capable of binding to the PCM, e.g. via one or more hydrogen bonds, ionic interaction, one or more covalent bonds, van der Waals forces or any combination of these.

Examples 9, 13, 15, 16, 18a, and 30 show the application of a chemical group, sulphorhodamine, which is chromophoric, fluorophoric, and zwitterionic, to modify cellulosic materials. Chromophoric groups are generally known as pigments, fluorophores are used as optical brighteners in textile and other applications, and ionic compounds act as retention aids in papermaking. Examples 10, 14, 17, 18b, and 21 show cellulosic fibre modification with fluorescein, which is likewise chromophoric, fluorophoric, and anionic over a wide pH range, and therefore will have applications where those groups are desired. Examples 8, 19, and 20 outline methods for the incorporation of an amino group to the fibre surface, which is cationic over a wide pH range and thus is suitable as an ionexchange agent and can also increase retention in papermaking.

Furthermore, the amino group is intrinsically more reactive than the chemical groups already present in cellulosic fibres and can thus be used for coupling a wide range of other chemicals to the fibre surface. The incorporation of radioactivity is demonstrated in Example 11 and in the XET enzyme assay described in part "a." under that heading. Radioactivity can be used for tracer applications and fibre morphology studies. Reactions to incorporated alkyl chains are described in Examples 22, 24, and 25. In particular, Examples 24 and 25 show how alkenyl succinic anhydride, a common paper hydrophobizing agent, can be specifically coupled to the fibre surface, potentially increasing retention of this group.

Examples 23 and 26 demonstrate that non-fluorophoric aromatic groups can be coupled to the fibre; the latter Example incorporates a cinnamoyl group, which can under go polymerization reactions such as those producing polystyrene and lignin. Likewise, the bromoisobutyryl group attached as described in Example 27 is another initiator for free-radical polymerization reactions. As described in Example 31, such groups can be used to produce cellulose-based graft co-polymers, which have high quality fibre-matrix interfaces with very strong mutual adhesion but low or no detrimental effect of the fibre/cellulose structure. The incorporation of biotin in Example 28 allows the direct coupling of avidin protein conjugates to the fibre surface, which is broad in scope and can be used to introduce enzyme and protein binding activity to the fibre.

Addition of a thiol (or sulfhydryl) group allows for highly specific and, most importantly, reversible coupling of other thiols via disulfide bond formation, as described in Examples 29 and 30. A vast array of chemical groups can be specifically introduced by this procedure and subsequently removed when no longer desired. Finally, all of the Examples mentioned above demonstrate that a wide variety of amine-reactive chemical groups can be used to incorporate other functionalities, including but not limited to, sulfonyl chlorides, isothiocyanates, isocyanates, acid anhydrides, activated carboxyl compounds (even those produced *in situ*), and thioesters. Many of these chemistries can be used to carry our reactions enhancing for example the fibre-fibre bonding or the reactivity of cellulose with other materials.

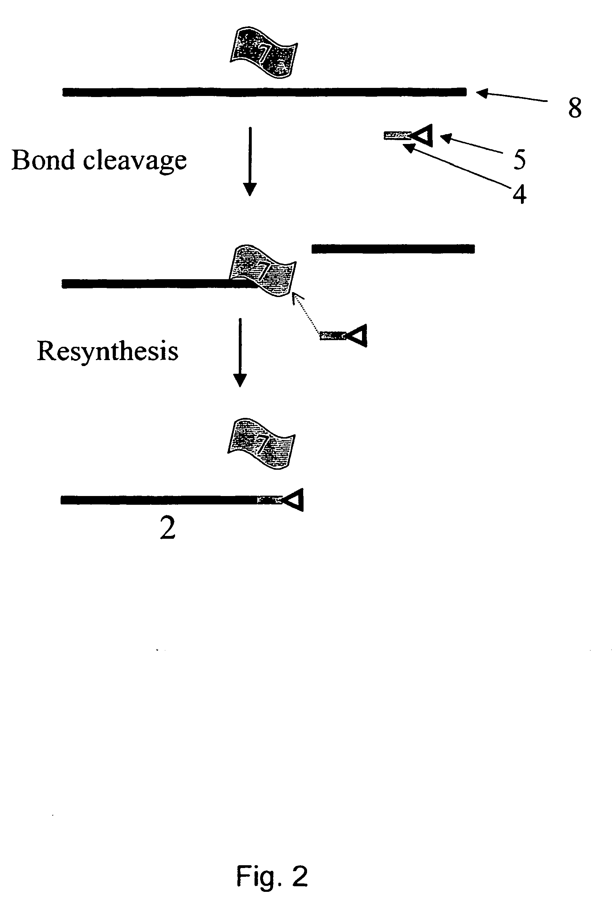

The CLM may be prepared by organic or chemical synthesis and/or by using the catalytic activity of certain enzymes. An embodiment of preparing a CLM using an enzyme and an CPF is illustrated in Figure 2. The SCP (8) is contacted with an enzyme (7) and CPF (4) comprising a chemical group (5). In this embodiment the enzyme (7) cleaves the SCP and incorporates the CPF with the chemical group instead, resulting in the product CLM (2). The CLM may comprise one or more chemical groups.

In an embodiment of the present invention, the CLM may be prepared using an enzyme capable of transferring native or chemically modified mono- or oligosaccharides onto the ends of oligo- or polysaccharides. Such enzymes include but are not limited to enzymes, have high transglycosylation activity but low hydrolytic activity, glucosyl hydrolases with high inherent transglycosylation activity, enzymes, which have been biotechnically engineered to enhance their transglycosylation activity and glycosyl transferases, which use nucleotide sugars as substrates.

In an embodiment of the present invention the enzyme may be defined as any enzyme which, when assayed with a suitable glycosyl donor substrate (e.g., xyloglucan) in the presence and absence of a mono-, oligo-, or polysaccharide acceptor substrate (e.g., XGO) under appropriate conditions to maintain enzyme activity, exhibits a rate of incorporation of the acceptor substrate into the donor substrate which is at least 10% of the hydrolytic rate, such as at least 15%, 20%, 25%, 30%, 40%, 50%, 75%, 100%, 200%, 300%, 400%, 500%, 600%, 700%, 800%, 900%, such as at least 1000% of the hydrolytic rate. The assay used for determining the rates of incorporation of the acceptor substrate into the donor substrate may be the Radiometric assay and/or the Colorimetric assay for determining enzyme activity which are described herein.

Representative examples of enzymes with naturally high transglycosylating activity include but are not limited to amylosucrases (Skov *et al* 2001. *J Biol Chem.* 276:25273-8) and cydodextrin glycosyltransferase (Ven der Veen *et al* 2000. *Biochim Biophys Acta.* 1543:336-360).. Many glycosyl hydrolases which operate by a retaining mechanism have transglycosylation activity, which can be enhanced by the use of organic solvents. Examples of such hydrolases include some cellulases and mannanases (Kwon *et al* 2002. *Biosci Biotechnol Biochem.* 66:110-6; Harjunpaa *et al* 1999. *FEBS Lett.* 443:149-53), xylanases (Christakopoulos *et al* 1996. *Carbohydr Res.* 289:91-104) and chitinases (Sasaki *et al 2002. J Biochem* (Tokyo). 131:557-64). Examples of enzymes, which have been genetically engineered for increased transglycosylating activity are so called glycosynthases based on retaining glycosyl hydrolases (Meyer *et al* 2001. *Chem Biol.* 8:437-43; Fairweather *et al* 2002. *Chembiochem.* 3:866-73). Examples of these types of enzymes are used for synthesizing designer oligosaccharides for academic, industrial and potential therapeutic purposes.

Preferably an enzyme is chosen having high transglycosylating activity and most preferably also for all practical purposes low or undetectable hydrolytic or other degradative activity. Preferably no nucleotide sugars or organic solvents are required to promote the transglycosylating activity. One example of such transglycosylating enzymes is xyloglucan endotransglycosylase, an enzyme known from plants.

For example, Stephen C. Fry *et al.* suggest in Biochem. J *15 (1992) 282,* p. 821-828 that XET is responsible for cutting and rejoining intermicrofibrillar xyloglucan chains and that XET thus causes the wall-loosening required for plant cell expansion. XET is believed to be present in all plants, in particular in all land plants. XET has been extracted from dicotyledons, monocotyledons, in particular graminaceous monocotyledons and liliaceous monocotyledons, and also from a moss and a liverwort. XET may be obtained from a plant as described in Example 1 (cauliflower) and in Example 5 (hybrid aspen cell suspension culture), or it may be obtained as described in Fry *et al. (supra).*

Alternatively, the transglycosylating enzyme is produced by aerobic cultivation of a host organism transformed with the genetic information encoding the transglycosylating enzyme. The host organism can be a plant in particular tobacco, maize or hybrid aspen, fungi in particular yeasts such as *Pichia pastoris* or *Saccharomyces cerevisiae,* filamentous fungi such as *Trichoderma reesei* or *Aspergilli,* containing the appropriate genetic information required for heterologous protein expression in the host in question. Such transformants can be prepared and cultivated by methods known in the art.

Genes: The gene encoding the transglycosylating enzyme can be obtained from nature, from an organism expressing a suitable transglycosylating enzyme, e.g. a plant or a micro-organism. The gene can also be constructed by means of genetic engineering, based on available knowledge of naturally occurring enzymes, and modified by deletion, substitution or addition of sequence information, such as coding regions and promotors.

The XET gene may for example be obtained from cauliflower (Example 3), from hybrid aspen (Example 4) or as disclosed in EP 562 836.

Host cells: The host cells comprising the resulting DNA construct may be obtained using methods known to a skilled person in this field.

The host cell is preferably a eukaryotic cell, in particular a plant cell such as poplar or tobacco cell suspension or tissue culture, or the leaves or seeds of said plants and similar plants. The plant cells can be transformed by *Agro-*

*bacterium* mediated gene transfer or by using a particle gun in a manner known *per se.* The host cell can also be yeast or filamentous fungal cell or a bacterial cell. In particular, the cell may belong to a species of *Trichoderma,* preferably *Trichoderma harzianum* or *Trichoderma reesei,* or a species of *Aspergillus,* most preferably *Aspergillus oryzae* or *Aspergillus niger.* Fungal cells may be transformed by a process involving protoplast formation and transformation of the protoplasts followed by regeneration of the cell wall in a manner known per se.

The use of *Aspergillus* as a host micro-organism has been described inter alia in EP 238 023 (Novo Nordisk A/S), and the use of *Trichoderma* has been described inter alia in EP0244234 A2 04-11-1987 [1987/45], EP0244234 A3 12-10-1988 [1988/41], EP0244234 B1 21-07-1993 [1993/29], EP0244234 B2 07-11-2001 [2001/45]; the contents of which are hereby incorporated by reference. The host cell may also be a yeast cell, e.g., a strain of *Saccharomyces,* in particular *Saccharomyces cerevisiae,* or a strain of *Pichia* sp. such as *Pichia pastoris* or *Kluyveromyces* sp., such as *Kluyveromyces lactis.* The host can also be bacterium, such as for example gram positive bacterium *Bacillus subtilis,* or gram negative bacteria such as *E. coli.* The transformation of the bacteria may, for instance, be effected by protoplast transformation or by using competent cells in a manner known *per se.*

According to the invention, a transglycosylating enzyme may be obtained from a dicotyledon or a monocotyledon, in particular a dicotyledon selected from the group consisting of the following families of plants; cauliflower, soy bean, tomato, potato, rape, sunflower, cotton, tobacco and poplar, or a monocotyledon selected from the group consisting of wheat, rice, corn and sugar cane. Examples of such enzymes is any enzyme encoded by one of the sequences SEQ.ID.NO. 1, 2, 3, or by a functional homologue thereof. By functional homologue is herein intended a sequence, exhibiting homology with enzyme encoded by one of the sequences SEQ.ID.NO. 1, 2, 3, said homology is at least of 50%-such as at least 60%, 70%, 80%, 90%, 95%, 99% or 100% percent.

The functional homologue may alternatively be an enzyme encoded from a nucleic acid sequence, said nucleic acid sequence having a homology with at least one of the sequences in SEQ.ID. NO. 1, 2, 3 of at least 50% such as at least 60%, 70%, 80%, 90%, 95%, 99% or 100% percent.

In the present context, the term "homology " indicates a quantitative measure of the degree of homology between two amino acid sequences of equal length or between two nucleotide $\frac{(N_{ref}-N_{dif})\cdot 100}{N_{ref}}$, sequences of equal length.

If the two sequences to be compared are not of equal length, they must be aligned to the best possible fit. The sequence identity can be calculated as wherein Ndif is the total number of non-identical residues in the two sequences when aligned, and wherein Nref is the number of residues in one of the sequences. Hence, the DNA sequence AGTCAGTC will have a sequence identity of 75% with the sequence AATCAATC (Ndif=2 and Nref=8). A gap is counted as non-identity of the specific residue(s), i.e. the DNA sequence AGTGTC will have a sequence identity of 75% with the DNA sequence AGTCAGTC (Ndif=2 and Nref=8). Sequence identity can alternatively be calculated by the BLAST program, e.g. the BLASTP program (Pearson & Lipman (1988) (www.ncbi.nlm.nih.gov/cgi-bin/BLAST). In one aspect of the invention, alignment is performed with the global align algorithm with default parameters as described by Huang & Miller (1991), available at http://www.ch.embnet.org/software/LALIGN-form.html.

Alternatively the enzyme may be an enzyme which exhibits lower sequence homology with the said sequences but has been engineered to have transglycosylating activity.

The present inventors have based the invention *inter alia* on the facts that xyloglucan, naturally present in the primary cell walls of plant fibres, is able to make strong hydrogen bonds to cellulose, and that endogenous XET activity of plants results in the incorporation of radioactive and fluorescent XGOs to the xyloglucan component of plant cell suspension cultures (see Biochem J. 279, 1991, p.529-535 and Plant Cell Physiol 40, 1999, p 1172 - 1176).

The inventors have then found that isolated xyloglucan polymers can be chemically and/or enzymatically modified to contain a wide range of different chemical groups and that such chemically modified xyloglucan polymers can be used as an interface for introducing new chemical groups onto the cellulosic fibre surfaces. A significant advantage of the method is that the use of such interface polymers avoids subsequent loss of fibre structure and performance otherwise commonly encountered with direct chemical modification of cellulose. The inventors have found that that a transglycosylating enzyme, such as XET, can use, as acceptor sugars, oligosaccharides containing different types of chemical groups.

Since water does not compete as a transglycosylation acceptor for such enzymes, they can be used in aqueous solutions to efficiently incorporate said chemical groups onto the interface polymers, such as xyloglucan, either in solution or when bound to another polymeric material such as cellulose. Further, the inventors have found that xyloglucan, even when chemically modified, binds tightly to the surface of the cellulose, and that the chemical groups introduced are, even when attached to the porous surfaces of cellulosic materials via XG, nevertheless accessible for further chemical reactions. The inventors have then found that by adding a transglycosylating enzyme and chemically modified CPFs to SCPs, it was surprisingly possible to attach many different new chemically chemical groups with a desired functionality onto PCM surfaces with a high yield.

The PCM to be modified may be derived from a plant selected from the group consisting of a monocotyledonous plant, such as a plant of the family *Gramineae,* and a dicotyledonous plant such as a plant is selected from the group consisting of angiospermous plants (hardwoods), coniferous plants (softwoods) and plants belonging to the *Gossypium* family.

The PCM may be in the form of cellulosic plant fibres or in the form of cellulosic microfibrils derived from cellulosic plant fibres or from a bacterium.

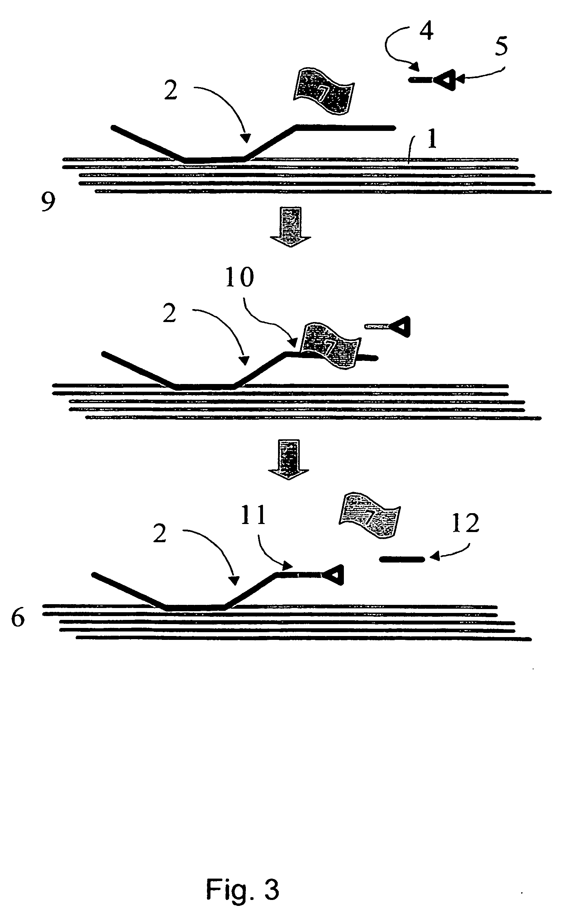

The SCP may form a part of the PCM to be modified, thus the step of incorporating the CPF comprising a chemical group with a desired functionality in the SCP, e.g. using an enzyme, may be performed directly on the PCM-SCP complex. The principle is illustrated in Figure 3. In upper part of Figure 3 one sees the PCM-SCP complex (9) comprises the PCM (1) and the SCP (2), the enzyme (7) and a CPF (4) comprising a chemical group with a desired functionality (5). In the middle part of Figure 3 the enzyme (7) binds to the SCP (2) of the PCM-SCP complex (9) and may form an intermediate complex (10). In the process leading to the lower part of Figure 3, the enzyme (7) cleaves the SCP (2) and incorporates (12) the CPF (4) comprising a chemical group with a desired functionality (5). (12) is the SCP fragment which was cleaves off the SCP.

Alternatively, the SCP needs not to be associated with the PCM to be modified. In the latter case the SCP may be modified to comprise the chemical group and product of the SCP modification, CLM, is then contacted with the PCM. Alternatively, SCP is first contacted with SCP-less PCM. When the SCP-PCM complex has been formed, the step of incorporating the CPF comprising a chemical group with a desired functionality the SCP, e.g. using an enzyme, may be performed directly on the PCM-SCP complex.

It is possible to modify the PCM with a mixture of chemical groups, e.g. by performing the methods described herein in sequence and/or by using a mixture of CLMs comprising different chemical groups and binding the mixture of CLMs comprising different chemical groups to the PCM in one process step.

Both SCP and/or CPF may contain the chemical group.

CPF may be derived from xyloglucan and may contain from 3 to about 100 including from 4 to 10 polymer backbone monosaccharide units.

In an embodiment CPF comprising the chemical group is brought into contact with the soluble polymeric carbohydrate (SCP) in the presence of an enzyme that is capable of promoting the formation of the complex consisting of said CPF comprising the chemical group, and at least a part of the SCP. The enzyme may be capable of transferring native or chemically modified mono- or oligosaccharides onto an oligo- and/or polysaccharide. In an embodiment the enzyme may be an enzyme having transglycosylation activity.

In another embodiment, the enzyme exhibits a rate of incorporation of the acceptor substrate into the donor substrate which is at least 10% of the hydrolytic rate, such as at least 15%, 20%, 25%, 30%, 40%, 50% or 75%, such as at least 100%, when assayed with a suitable glycosyl donor substrate in the presence and absence of a mono-, oligo-, or polysaccharide acceptor substrate under appropriate conditions to maintain enzyme activity. The glycosyl donor substrate may be a xyloglucan and the acceptor substrate may be a xyloglucan-oligosaccharide.

The assay for evaluation the rate of incorporation of the acceptor substrate into the donor substrate be an assay consists of the following steps

i) incubating 0.1 mg xyloglucan, 0.1 mg xyloglucan oligosaccharides (mixture of XXXG, XLXG, XXLG, and XLLG; 15:7:32:46 weight ratio) in 200 $\mu$L 40 mM citrate buffer pH 5.5 for 30 minutes at 30 °C.

ii) stopping the reaction with 100 $\mu$L 1M HCl,

iii) the ionic strength was adjusted by adding 800 $\mu$L 20% $Na_2SO_4$ and 200 $\mu$L of an $I_2$ (0.5 % $I_2$, 1% KI, w/w) solution

iv) measuring the absorbance was measured at 620 nm

v) performing the steps i)-iv) without adding the xyloglucan oligosaccharides (XGO) of step i)

vi) calculating the absorbance increase in percent between from the incubation with XGO to the incubation without XGO.

The enzyme may be selected from the group consisting of a transglycosylase, a glycosyl hydrolase, a glycosyl transferase. The enzyme may be a wild type enzyme or a functionally and/or structurally modified enzyme derived from such wild type enzyme. In an embodiment the enzyme is a xyloglucan endotransglycosylase (XET, EC 2.4.1.207).

The enzyme having transglycosylation activity may be derived from a plant including a plant belonging to the family *Brassica* and a plant of a *Populus* species or may be produced produced recombinantly.

In an embodiment, the chemical group having a desired functionality may be selected from the group consisting of an ionic group, a hydrophobic group, an uncharged hydrophilic group, a reactive group, a nucleophile, a polymerisable monomer, a chromophoric group, a fluorophoric group, biotin, a radioactive isotope, a free-radical precursor, a stable free radical moiety, a protein and a protein binding agent.

An embodiment of the present invention relates to a method wherein the obtained modified PCM has, relative to the non-modified PCM, altered surface properties, such as altered strength properties, altered surface tension, altered water repellence properties, altered reactivity, altered optical properties or combinations of these.

Another aspect of the invention is a modified polymeric carbohydrate material (mPCM) obtainable by the method of any of the methods described herein, the material having bound thereto chemical groups having a desired functionality, said binding is mediated by a carbohydrate linker molecule comprising a chemical group and an SCP which is a hemicellulose, which carbohydrate linker molecule is capable of binding to the PCM. The mPCM may be in the form of cellulosic plant fibres or cellulosic microfibrils derived from cellulosic plant fibres or from a bacterium.

The chemical groups of the mPCM may be reactive groups capable of binding other functional groups and the mPCM may have bound thereto two or more different types of chemical groups.

Another aspect of the invention is a composite material comprising the materials described herein.

Yet another aspect of the invention relates to the use of the mPCMs or the composite materials in manufacturing of paper sheets, corrugated cardboard, woven fabrics, auxiliary agents in a diagnostic or chemical assay or process, packaging agents for liquids and foodstuffs, paper and cardboards which are often laminated with a thermoplastic, such as polyethylene to provide an impermeable barrier to aqueous solutions, textiles and security papers, bank notes, traceable documents fillers, laminates and panel products, wood-polymer composites, polymer composites, alloys and blends, and cellulose derivates (cellulosics).

According to the present invention, new chemical groups can be added to PCM containing an inherent suitable SCP by using the transglycosylating enzyme to couple the chemically modified CPFs to the SCP contained in the cellulose materials. In the present context the term "inherent" means that the PCM comprises a SCP prior to the modification. According to the present invention, new chemical groups can also be added to PCM not containing inherent SCP by first using the transglycosylating enzyme to couple the chemically modified CPFs to the SCP in solution followed by sorption of the modified SCP onto the PCM.

According to a specific embodiment of the present invention, new chemical groups can be added to cellulose materials not containing inherent xyloglucan by first using the XET enzyme to couple the chemically modified XGOs to xyloglucan (XG) in solution followed by sorption of the modified XG onto the cellulose materials.

According to the present invention, a PCM is given altered surface chemistry and/or improved chemical reactivity after treatment with chemically modified CPFs, which are coupled to a SCP using the transglycosylating enzyme. The SCPs carrying the chemically reactive groups will bind tightly to the PCM surfaces thus maintaining the chemical reactivity of said surfaces. The chemical reactivity per se or when modified by further chemical and/or polymerization reactions influences the surface properties of the PCM. Moreover, the density of the chemically reactive groups is controlled by altering the concentrations of the transglycosylating enzyme and/or the CPFs and/or the reaction time, as shown in Examples 14a and 14b. The surface properties may be measured by any method known in the art as shown in the attached examples, e.g., Example 16b.

In nature, transglycosylating enzymes, such as the XET enzyme, function *in vivo,* in the living plant, so the enzyme is clearly able to work in an aqueous environment. The method according to the invention may thus be carried out in an aqueous solution, or it may be carried out in water in the presence of certain components such as a buffer and/or a wetting agent and/or a stabiliser and/or a polymer and/or an organic component reducing the water activity such as DMSO.

The buffer may suitably be a phosphate, borate, citrate, acetate, adipate, triethanolamine, monoethanolamine, diethanolamine, carbonate (especially alkali metal or alkaline earth metal, in particular sodium or potassium carbonate, or ammonium and HCl salts), diamine, especially diaminoethane, imidazole, Tris, or amino acid buffer. The wetting agent serves to improve the wettability of the PCM. The wetting agent is preferably of a non-ionic surfactant type. The stabiliser may be an agent stabilising the enzyme.

It will generally be appropriate to incubate the reaction medium, e.g. comprising the PCM the CLM and optionally one or more components selected from group a SPC which may or may not comprise a chemical group, a CPF comprising a chemical groups and an enzyme) for a period of at least a few minutes, depending on the reaction conditions. An incubation time of about one minute to 20 hours, such as approximately 2-5 minutes, 5-7 minutes, 7-10 minutes, 10-15 minutes, 15-20 minutes, 20-30 minutes, 30-40 minutes, 40-60 minutes, 1-2 hours, 2-4 hours, 4-6 hours, 6-8 hours, 8-10 hours, 10-12 hours, 12-14 hours, 14-16 hours, 16-18 hours or 18-20 hours, will generally be suitable. In particular an incubation time of from 30 minutes to 10 hours will often be preferred. The incubation time is preferably controlled with a time interval narrower than +/- 5 hours, such as narrower than +/- 2 hours, +/- 1 hour, +/- 45 minutes, +/- 30 minutes, +/- 15 minutes, +/- 10, minutes, +/- 5 minutes, +/- 2 minutes, +/- 1 minutes, +/- 30 seconds, +/- 10 seconds, +/- 1 second, +/- 0,1 seconds or +/- 0,01 seconds.

The temperature of the reaction medium in the process of the invention may suitably be in the range of -5 - 100 °C, such as 0 - 5, 5-10, 10-15, 15-20, 20-25, 25-30, 30-33, 33-36, 36-38, 38-40, 40-50, 50-60, 60-70, 70-80, 80-90, or 90-100 °C. In embodiments where the reaction mixture comprises an enzyme the temperature of reaction mixture during incubation should preferably be in near the temperature that creates the optimal turnover during the incubation. Preferably temperature should be less than 10 °C from the temperature that creates the optimal turnover during the incubation, such as less than 10 °C, 8 °C, 6 °C, 4 °C, 2 °C, 1 °C, 0.5 °C or 0.1 °C.

For binding the modified or unmodified SCP to the PCM, it will generally be appropriate to incubate the mixture for a period of at least a few minutes, depending on the reaction conditions. An incubation time of about one minute to 48 hours will generally be suitable, in particular an incubation time of from 30 minutes to 10 hours will often be preferred. The incubation solution may suitably be buffered in the pH range 2-11, preferably pH 5-8, with a buffer concentration between 0 and 5 M, preferably 0.0-0.1 M. The temperature of the reaction medium in this process may suitably be in the range of 10-100 oC, depending on the stability of the individual components in the mixture.

The invention will now be described in further details with reference to the accompanying drawings wherein:

Figure 1 illustrates the principle of modifying a polymeric carbohydrate material,

Figure 2 illustrates the principle of incorporating a soluble carbohydrate polymer comprising a chemical group in an polymeric carbohydrate material,

Figure 3 illustrates the principle of modifying PCM which comprises SCP prior to the modification,

Figure 4 shows examples of xyloglucan oligosaccharide structures (XGO-7 (XXXG), XGO-8 (XLXG, XXLG) and XGO-9 (XLLG)),

Figure 5 illustrates the time dependence of XG-FITC production,

Figure 6 illustrates the dependence of XG-FITC production on the amount of enzyme in the reaction,

Figure 7 shows a confocal fluorescence microscopy image of XG-FITC-treated paper,

Figure 8 shows a photo of incorporation of fluorescein into paper treated with XG-NH$_2$,

Figure 9 illustrates the relative amounts of amino groups present on the surface of XG-NH$_2$-modified cellulosic paper following treatment with various amino-reactive reagents,

Figure 10 illustrates the reactivity of paper with and without modification by XG-NH$_2$ toward FITC, and

Figure 11 illustrates the reaction of thiolated paper with sulforhodamine methanethiosulfonate.

EXAMPLES

**Materials and Methods**

Determination of enzyme activity and in particular XET activity

*a. Radiometric assay*

The present inventors developed a modified assay method similar to that of Steele, N. et al. (Phytochemistry, 2000,54,667-680) and this was used as follows. [1-$^3$H]-XLLGol (300 μl, 0.36 μmol in H$_2$O) was added to non-radioactive xgo-9 alditol (700 μl, 8.6 μmol) in 50 mM citrate phosphate buffer pH 5.5. When used in assay this stock was diluted in buffer to a concentration of 2.24 μmol/ml (3.1 mg/ml). Radioactive XLLGol stock (10 μl, 2.24 μmol/ml) was added to xyloglucan (10 μL, 3.0 mg/ml in buffer). Diluted enzyme solution (10 μl) was added and reaction mixture was incubated at 25° C for 30 min. The reaction was then stopped with a 50% solution of formic acid in water (20 μL). The reaction mixture (40 μL) was dried onto rounds of Whatman 3MM chromatography paper (diameter 20 mm). The rounds were washed for 4 h under running water, dried in a 65° C oven, and analysed for radioactive incorporation in scintillation vials containing Ready-safe scintillation cocktail (6 ml, Beckman Coulter AB, Bromma, Sweden) with a Packard Tricarb 1500 scintillation counter. There was no elution of radioactivity from paper into scintillation liquid. Blanks where measured by adding acid to reaction before enzyme, control of total added radioactivity was measured by not washing the control paper rounds. A measure of how filter paper affected the assay was obtained by comparing controls with scintillation counts from control mixture without filter paper.

b. Colorimetric assay:

The enzyme activity was measured according to a modified protocol based upon that of Sulová et al. (1995) *Anal. Biochem.* **229,** 80-85. XET was incubated with 0.1 mg xyloglucan, 0.1 mg xyloglucan oligosaccharides (mixture of XXXG, XLXG, XXLG, and XLLG; 15:7:32:46) in 200 $\mu$L 40 mM citrate buffer pH 5.5 for 30 minutes at 30 °C. The assay was stopped with 100 $\mu$L 1M HCl, the ionic strength was adjusted with 800 $\mu$L 20% $Na_2SO_4$ and 200 $\mu$L of an $I_2$ (0.5 % $I_2$, 1% KI, w/w) solution was added. The absorbance was measured at 620 nm. For the purposes of this document, one unit of enzyme activity is defined as 0.1 units of absorbance change (after correction for background hydrolysis) over 30 min.

EXAMPLE 1

**Extraction of XET from cauliflower**

The extraction of cauliflower was prepared by homogenizing the cauliflower florets in ice-cold citrate buffer (0.35 M, pH 5.5 containing 10 mM $CaCl_2$), and filtering the mixture through miracloth. The filtrate was diluted with ultrapure water (18 M$\Omega$.cm) until the conductivity of the solution was the same as that of 0.1 M ammonium acetate buffer pH 5.5. The solution was then gently stirred with SP-Fast Flow cation exchanger (Amersham Biosciences, Sweden) for 1 hour at 4°C. The SP-FF gel was collected on a glass frit filter and was washed with 0.1 M ammonium acetate, pH 5.5, until the filtrate was clear. The gel was packed into a column and bound proteins were eluted with a linear gradient of 0 to 1.0 M NaCl in 0.1 M ammonium acetate, pH 5.5, over 10 column volumes. Fractions containing XET activity were pooled and mixed with ammonium sulfate (1 M). The sample was applied to a Resource-ISO column (1 ml, Amersham Biosciences, Sweden) and then eluted by a linear gradient of 1.0 M to 0 ammonium sulfate in ammonium acetate, pH 5.5, over 20 column volumes. Fractions containing XET activity were pooled and analyzed for purity by SDS-PAGE and silver staining. The gel showed only a single band that was confirmed to be XET by immunoblotting.

EXAMPLE 2

**Extraction of XET from the cell suspension culture of hybrid aspen,** *Populus tremula x tremuloides Mich.*

Poplar XET was extracted by homogenizing material from a granular cell culture in ice-cold citrate buffer (0.35 M, pH 5.5 containing 10 mM $CaCl_2$), stirring the mixture for 2 hours at 4°C, and filtering it through miracloth. The filtrate was diluted with ultrapure water (18 M$\Omega$.cm) until the conductivity of the solution was the same as that of 0.1 M ammonium acetate buffer pH 5.5. The solution was then gently stirred with SP-Fast Flow cation exchanger (Amersham Biosciences, Sweden) for 1 hour at 4°C. The SP-Trisacryl gel was collected and washed with 0.1 M ammonium acetate, pH 5.5 through a glass frit filter until the filtrate was clear. The gel was packed into a column and bound proteins were eluted with a linear gradient of 0.0 to 1.0 M NaCl in 0.1 M ammonium acetate, pH 5.5, over 10 column volumes. Fractions containing XET activity were pooled, buffer-exchanged to 0.1 M ammonium acetate, pH 5.5, on a Sephadex G-25 size-exclusion column, and loaded onto a Resource S cation exchange column (1 ml, Pharmacia). The bound proteins were eluted with a linear gradient of 0.0 to 1.0 M NaCl in 0.1 M ammonium acetate, pH 5.5, over 10 column volumes. Fractions containing XET activity were pooled, applied to a Sephacryl S200 column (120 ml, Amersham Biosciences, Sweden), and eluted with 2 column volumes of 0.1 M ammonium acetate, pH 5.5. Fractions corresponding to the last peak, which contained the highest amount of XET activity, were pooled and applied to the Resource S column (1 ml, Amersham Biosciences, Sweden). Fractions were then eluted with a linear gradient of 0.0 to 0.5 M NaCl in 0.1 M ammonium acetate, pH 5.5, in a volume corresponding to over 10 column volumes. Fractions containing XET activity were pooled and shown to be homogeneous by SDS-PAGE.

EXAMPLE 3

**Purification of recombinant XET from** *Pichia pastoris* **cultivation**

Cells from *Pichia pastoris* cultures transformed with the genetic material encoding XET (see examples 4. and 5.) generally showed the highest XET activity in the culture medium after 3 days of methanol induction. These yeast cells were harvested by centrifugation and the culture media were further filtrated through a 0.45 $\mu$m filter and then concentrated and desalted by ultra-filtration. The XET was purified by two step cation exchange chromatography. The concentrated culture filtrate (in a buffer of 0.1 M ammonium acetate pH 5.5) was first applied to an SP-trisacryl column and then eluted by a linear gradient of 0 to 1 M NaCl in 0.1 M ammonium acetate pH 5.5. The fractions containing XET activity were pooled desalted to 0.1 M ammonium acetate pH 5.5, and applied to a Resource S column, subsequently eluted by the same salt linear gradient as used in the first step cation exchange chromatography. The homogeneity of the protein was examined by SDS-PAGE and silver staining. Only a single band with a molecular weight about 32 kDa appeared, and this was confirmed by immunoblotting to be XET. The protocol was shown to be successful for expression of all the sequences SEQ.ID.NO.1,2,3, encoding different isoenzymes of XET.

EXAMPLE 4

**Isolation of the gene coding for the XET from cauliflower**

cDNA corresponding to the XET gene was isolated by extraction of RNA by grinding fresh cauliflower tissues under liquid nitrogen ($N_2$) and lysing the cells under denaturing conditions. The lysed cell sample was then centrifuged through a QIA Shredder column to remove the insoluble material. The RNA was subsequently selectively bound to an RNAeasy membrane, washed with buffer and finally eluted in water. The XET cDNA was prepared using a two step Polymerase Chain Reaction (PCR) according to protocol known in the art. The first strand of cDNA was synthesized using 1 μg of RNA and an oligo dT$_{(18)}$ primer with reverse transcriptase at 55°C for 1 hour. The templates for the degenerate primers for the specific PCR reaction were obtained by N-terminal sequencing of the cauliflower XET protein indicating a sequence

I P P R K A I D V P F G R N Y.

The primer sequences of all the primers used are shown in Table 1. The reverse primer CFXETR1, and the nested primers CFXET F1 were used for a two-step nested PCR resulting in a PCR product with the correct molecular weight and sequence corresponding to XET in the glycosyl hydrolase / transglycosylase family 16. The full-length cDNA was then amplified using a series of degenerate nested primers (Table 1) followed by sequence determination of the full-length cDNA (SEQ.ID.NO.1).

Table 1. Primers used in the examples

| | |
|---|---|
| CFXETFI | AARGCNATHGAYGTNCCNTTYGG |
| CFXETF2 | CCNCCNAGRAARGCNATHGAYGT |
| CFXETRI | AAYTCRAARTCDATYTCRTCRTGYTC |
| CFXET -5r-I | TGCAGTGACGACCCCAGCGGT A TC |
| CFXET -5r-2 | CAGCGGTATCACCAGCCGGCAG |
| CFXET -3r-I | CTGCCGGCTGGTGATACCGCTG |
| CFXET -3r-2 | GAT ACCGCTGGGGTCGTCACTGCA |
| 5'RACEOUTER | GCTGATGGCGATGAATGAACACTG |
| 5'RACEINNER | CGCGGATCCGAACACTGCGTTTGCTGGCTTTGATG |
| 3'RACEOUTER | GCGAGCACAGAATTAATACGACT |
| 3'RACEINNER | CGAGGATCCGAATTAATACGACTCACTATAGG |
| CF FL-FI | AACATCATTCATCATCATCACCATCACC |
| CF FL-F2 | CATCACCATCACCATCACCATAACATCT |
| CF FL Rt | TGAACAGAAGCATAATACTCATAATAATCCGG |
| CF FL R2 | CATAATAATCCGGTTCATTGAAAGTTTCG |

IUB-Code for mixed bases: M=A+C, R=A+G, W=A+T, S=G+C, Y=C+T, V=A+G+C, H=A+C+T, B=G+T+C, N=A+G+C+T,K=G+T.

The primers CFXETFI, CFXETF2 and CFXETRI are gene-specific degenerate primers for the RT PCR. CFXET-5r-I, CFXET-5r-2, CFXET-3r-I and CFXET-3r-2 are gene-specific internal primers while 5'RACE OUTER, 5'RACE INNER, 3'RACE OUTER and 3'RACE INNER are complementary primers to the adapters of the RLM-RACE. CF -FL-FI, CF -FL-F2, CF -FL-RI are CF -FL-R2 gene-specific primers for the amplification of the full-length cDNA.

EXAMPLE 5

**Isolation of the gene coding for the XET from hybrid aspen**

The cDNA coding for a poplar XET was isolated for instance from a cambial EST library of hybrid aspen, constructed as described in Hertzberg *et al*, 1998. Annotation of the library revealed three sequences corresponding to XET-like enzymes. Full-length sequencing of one of the clones revealed that it contained a cDNA copy of a full-length XET enzyme designated XET16A (SEQ.ID.NO.3) while another clone corresponded to a second full-length XET enzyme designated XET16C (SEQ.ID.NO.2).

EXAMPLE 6

**Extraction of xyloglucan from tamarind kernel powder**

The method of Edwards *et al.* (Planta 1985, 163,133-140) was modified as follows. $NaBH_4$ (0.75 g) was dissolved in 2.0 M NaOH (1.5 L). De-oiled tamarind kernel powder (30 g) was added to the solution slowly with vigorous stirring (paddle stirrer) to avoid clumping. The mixture was then heated to 90°C and held at that temperature for 1 hour with continuous stirring. After partial cooling, solids were filtered off through glass fibres and discarded. After further cooling, the filtrate was acidified by slow addition of glacial acetic acid (300 ml), followed by slow addition of EtOH (3.0 l) to precipitate xyloglucan as a colorless, gelatinous mass. The solids were collected by filtering through a cotton towel and the filtrate subsequently discarded. The xyloglucan was then dissolved in pure water (1.5 L, 18 MΩ.cm) with gentle heating and re-precipitated by the slow addition of EtOH (3.0 L). The solid mass was recollected by filtration through a cotton towel, which was wrung by hand to liberate excess filtrate. The solids were subsequently dried under reduced pressure (oil pump) and ground in a household coffee grinder (Braun) to yield a fine powder (17 g).

EXAMPLE 7

**Endoglucanase mediated production of xyloglucan oligosaccharides**

Xyloglucan (3 g) was dissolved in 200 ml purified water (18 MΩ.cm) at 50°C with vigorous stirring. Upon cooling to 30°C, cellulase (30 mg, 4 U/mg, from *T. reesei*, Fluka) was added and the solution maintained at that temperature overnight. Activated carbon (3 g) was then added, and the mixture stirred for 15 min. Following the addition of acetonitrile (200 ml), the mixture was filtered through a pad of celite on glass fibre filter paper (Whatman GF/A). The filtrate was then concentrated *in vacuo* (water aspirator) and the residual solvent was removed with a high vacuum (oil) pump. The mixture of xyloglucan-oligosaccharides (XXXG, XLXG, XXLG, and XLLG in the molar ratio 15:7:32:46 as determined by high performance anion exchange chromatography with pulsed amperometric detection, HPAEC-PAD) was fractionated by semi-preparative HPLC on an Amide-80 column (TosoHaas, 21.5 mm x 300 mm, eluent 55:45 acetonitrile-water) when required. XLXG and XXLG were not resolvable under these conditions. Electrospray ionization mass spectrometry (Micromass Q-TOF2) was used to confirm the identity of the oligosaccharides.

Xyloglucan (3 g) was dissolved in 200 ml pure water (18 MΩ.cm) at 50°C with vigorous stirring. Upon cooling to 30°C, cellulase (30 mg, 4 U/mg, from *Trichoderma reesei*, Fluka) was added and the solution maintained at that temperature overnight. Beta-galactosidase (150 mg, 9 U/mg against lactose, from *Apergillus oryzae*, Sigma G-5160) was then added and the solution stirred for 1 h at room temperature. The solution was boiled for 3 min, followed by rapid cooling prior to the addition of activated carbon (3 g). The mixture was then stirred 15 min at room temperature. Following the addition of acetonitrile (200 ml), the mixture was filtered through a pad of celite on glass fibre filter paper (Whatman GF/A). The filtrate was then concentrated *in vacuo* (water aspirator) and the residual solvent was removed with a high vacuum (oil) pump. The mixture of xyloglucan-oligosaccharides was then fractionated by semi-preparative HPLC on an Amide-80 column (TosoHaas, 21.5 mm x 300 mm, eluent 55:45 acetonitrile-water). Electrospray ionization mass spectrometry (Micromass Q-TOF2) was used to confirm the identity of the oligosaccharides.

EXAMPLE 8

**Preparation of aminoalditol derivatives of xyloglucan-oligosaccharides (XGO-NH$_2$)**

Xyloglucan-oligosaccharides (2.4 g, 1.9 mmol, mixture of XXXG, XLXG, XXLG, and XLLG) were dissolved in saturated ammonium hydrogencarbonate solution (50 ml). Sodium cyanoborohydride (2.4 g, 38 mmol) was then added, and the reaction stirred at room temperature in the dark. After seven days, the reaction was filtered and acetic acid was added until the solution reached pH 2. After concentration *in vacuo*, the crude product was redissolved in 75 ml water and applied in ten portions to a P2 column (Bio-rad, Bio-Gel P2, 5cm x 22cm). Fractions from each column run, which contained XGO-NH$_2$ and exhibited low conductivity, were pooled and concentrated to dryness (yield 1.31 g, 51%). Electrospray ionization mass spectrometry (Micromass Q-TOF2) was used to confirm the identity of the modified oligosaccharides.

EXAMPLE 9

**Preparation of sulforhodamine derivatives of xylogluco-oligosaccharides (XGO-SR)**

XGO aminoalditols (XGO-NH$_2$, 0.5 g, 0.4 mM, mixture of XXXG-NH$_2$, XLXG-NH$_2$, XXLG-NH$_2$, and XLLG-NH$_2$) were dissolved in 3% aqueous sodium tetraborate (30 ml). Sulforhodamine B acid chloride (192 mg, 0.3 mM, Fluka 86186) was dissolved in dimethyl formamide (DMF, 1 ml) and added dropwise to the stirred solution. The reaction was monitored by TLC (5:4:1 chloroform: methanol: water) and concentrated to dryness after seven days. The crude product was purified by flash chromatography of silica gel (stepwise elution with 55:45:5 and 5:4:1 chloroform: methanol: water). To remove trace amounts of silica from the product, the material was loaded onto a reverse phase chromatography column (Supelclean ENVI-18 SPE tube, 6 ml, Supelco, Bellefonte, PA, U.S.A.) and was eluted by a stepwise gradient of de-ionised water, 10% aqueous acetonitrile, and 20% aqueous acetonitrile (yield: 20 mg, 2.7%).

EXAMPLE 10

**Preparation of fluorescein derivatives of xylogluco-oligosaccharides (XGO-FITC)**

Fluorescein isothiocyanate Isomer I (FITC, 12 mg, 0.03 mmol, Fluka 46952) was added to a solution of XGO aminoalditols (XGO-NH$_2$, 45 mg, 0.036 mmol, Mixture of XXXG-NH$_2$, XLXG- NH$_2$, XXLG-NH$_2$, and XLLG-NH$_2$) in sodium bicarbonate buffer (100 mM, pH 9.0, 20 ml). The reaction was monitored by TLC (70:30:1 acetonitrile:water:acetic acid) and concentrated to dryness *in vacuo* after stirring for 24 h at room temperature. The crude product was redissolved in 1.5 ml ultrapure water, applied to a P2 column (Bio-rad, Bio-Gel P2, 1.6 cm x 50 cm), and eluted with 10 mM aqueous ammonium bicarbonate at a flow rate of 0.2 ml/min. All fractions were analysed by TLC (70:30:1 acetonitrile:water:acetic acid), which indicated that unreacted FITC and XGO-NH$_2$ were successfully separated from the desired product. Fractions containing XGO-FITC (detected by an on-line UV detector and TLC) and exhibiting low conductivity were pooled and concentrated *in vacuo* to afford an orange solid (yield: 34 mg, 60%). Electrospray ionization mass spectrometry (Micromass Q-TOF2) was used to confirm the identity of the modified oligosaccharides.

EXAMPLE 11

**Synthesis of radioactive and non-radioactive alditol derivatives of XLLG xylogluco-oligosaccharide ([1-$^3$H]-XLLGol and [1-$^1$H]-XLLGol)**

Xylogluco-oligosaccharide XLLG (8.6 μmol) was dissolved in purified water (250 μl, 18 MΩ.cm), which had been adjusted to pH 11.5 with NaOH. NaB$^3$H$_4$ (8.2 μmol, 3.76 GBq) was then added and the reaction was allowed to stand overnight at room temperature. The reaction was stopped by careful addition of glacial acetic acid until the pH of the solution was approximately 4. The solution was then allowed to stand for a period of 30 min to allow tritium gas to vent through the fume hood. Salts were removed from the product by gel filtration chromatography on Bio-Gel P-2 resin (Bio-Rad, bed volume 20 ml) with purified water (18 MΩ.cm) as the eluent. Fractions of approximately 1 ml volume were collected. The fractions were analyzed by liquid scintillation counting and thin-layer chromatography (silica gel, 7:3 acetonitrile-water eluent, ammonium molybdate/sulfuric acid stain). The fractions, which were both radioactive and contained a product with an Rf identical to XLLG were pooled. A qualitative Tollens test for reducing sugars on this product was negative, which indicated that the reduction reaction had gone to completion. The product a radioactivity of 115270 Bq/μL.

Synthesis of non-radioactive XLLGol was carried out in a manner identical to that described above except that NaBH$_4$ replaced NaB$^3$H$_4$ as the reducing agent. Evaporation of the chromatography solvent yielded the product as a white powder, which gave a proton NMR spectrum identical to that previously reported (York, W. *et al.,* Carbohydrate Research 1990, 200, 9-31). The average yield of three reactions (50 (+/-) 3%) was used to estimate the yield of the radioactive synthesis, which indicated a concentration of $1.21 \times 10^{-9}$ mol/L and specific activity of 95 MBq/μL.

EXAMPLE 12

**Preparation of regenerated cellulose membranes**

a. Preparation of regenerated cellulose membrane from cuprammonium solution

According to the method of Okajima [Okajima, K. (1995) *Polymer Journal,* **27**(11), 1113-1122], 10g cellulose (Whatman No. 1 filter paper, UK) was dissolved in a mixture of 65g $NH_4OH$ (20%), 12g freshly prepared $Cu(OH)_2$, 8g 10% (w/v) NaOH and 30g water to give a clear blue viscous solution at 4°C. The solution was cast on a glass plate to give a thickness of 0.3 mm and then placed in coagulation baths maintained at 4 °C of 10% aqueous NaOH followed by 4% aqueous $H_2SO_4$ for 5 min each , respectively. The regenerated cellulose films obtained were washed in running water and dried on a glass plate at room temperature.

b. Preparation of regenerated cellulose membrane from aqueous NaOH/urea solution.

*Bemliese®* nonwoven cloth made from cotton linters in curprammonium solution (DP= 650, Asahi Chemical Industry Co. Ltd., Japan) was used as the source of cellulose. 10 g *Bemliese®* nonwoven cloth was dissolved in 200 ml 6 wt % NaOH / 4 wt % urea aqueous solution to obtain a clear cellulose solution at 4 °C. The solution was cast on a glass plate to give a thickness of 0.5 mm, then immediately immersed into 5 wt % $H_2SO_4$ aqueous solution to allow coagulatation for 5 min at 4 °C. The transparent membranes obtained were washed by running water and dried in air on a glass plate at room temperature.

EXAMPLE 13

**XET mediated incorporation of sulforhodamine-modified xyloglucan oligosaccharides (XGO-SR) into xyloglucan in solution**

The fluorophore sulfurhodamine was chemically incorporated on the reducing end of xyloglucan oligosaccharides to produce XGO-rhodamine as described in Example 8. A mixture (4 ml) of xyloglucan (XG, 0.5 mg/ml), XGO-rhodamine (0.5 mg/ml) and XET (0.025 mg/ml) in ammonium acetate buffer (50 mM, pH 5.5) was incubated at room temperature (22°C) for 10 min. The reaction was terminated by eluting the reaction mixture through a HiTrap SP FF column (Amersham Biosciences, Sweden) to remove the XET enzyme. Approximately 25% of the added XG was modified with XGO-rhodamine, as determined by the colorimetric assay of Kooiman [Kooiman, P. (1960) *Recl. Trav. Chim. Pay-Bas,* **79**, 675-678].

EXAMPLE 14

**XET mediated incorporation of fluorescein-modified xyloglucan oligosaccharides (XGO-FITC) into xyloglucan in solution**

Fluorescein isothiocyanate Isomer I was chemically incorporated on the reducing end of xyloglucan oligosaccharides to produce XGO-FITC as described in Example 10. The effects of the XET enzyme concentration and the reaction time on the incorporation of XGO-FITC into xyloglucan in solution were analysed as follows.

a. Time dependence

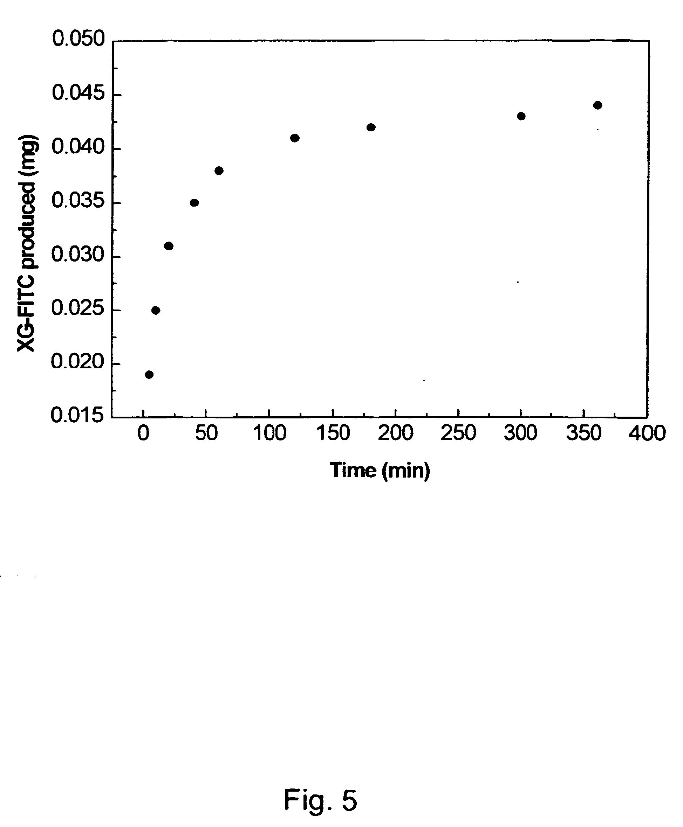

Samples containing a mixture (200 $\mu$L total volume) of xyloglucan (XG, 1 mg/ml), XGO-FITC (0.5 mg/ml) and XET (8 units) in citrate buffer (20mM, pH 5.5) were incubated at 30 °C for 5, 10, 20, 40, 60, 120, 180, 300, and 360 min. At the appropriate time, each reaction was terminated by heating at 75 °C for 5 min. After cooling to room temperature, 400$\mu$L of ethanol was added and the mixture was centrifuged at 12000 g for 5 min at 4 °C to precipitate modified and unmodified XG while leaving XGO-FITC in solution. Both the precipitate and the supernatant were dried under vacuum and redissolved in 200 $\mu$L water separately. 0.019, 0.025, 0.031, 0.035, 0.038, 0.041, 0.042, 0.043, 0.044 mg of XGO-FITC were incorporated into the reducing end of xyloglucan in the 5, 10, 20, 40, 60, 120, 180, 300, and 360 min samples, respectively, as determined by the UV absorption at 495 nm of the redissolved precipitate solution using a standard line derived from XGO-FITC solutions of increasing concentration. The results are plotted in Figure 5.

b. Enzyme dependence

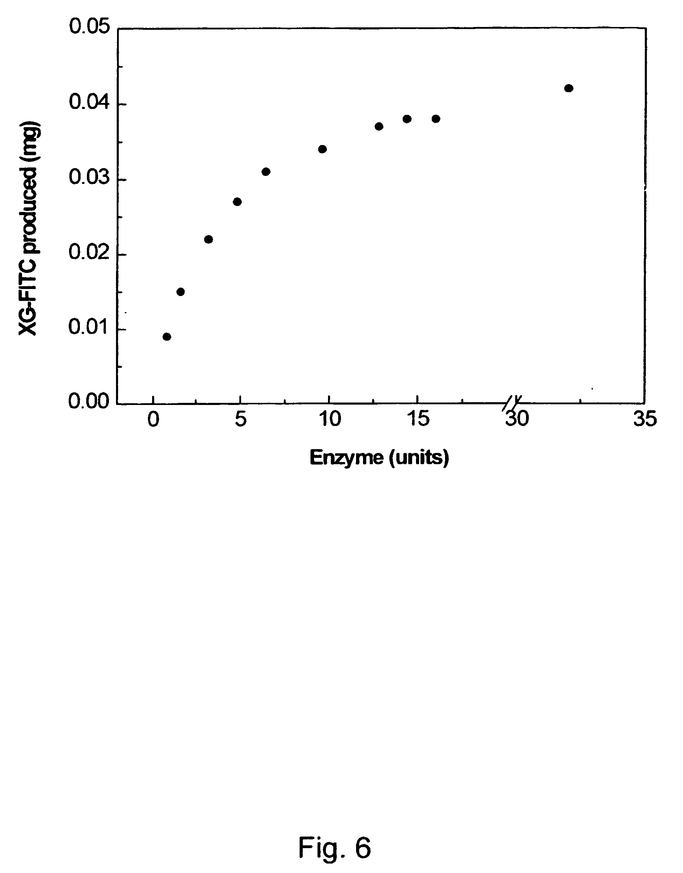

A mixture (200 μL total volume) of xyloglucan (XG, 1 mg/ml), XGO-FITC (0.5 mg/ml) in citrate buffer (20mM, pH 5.5) was incubated with decreasing amounts of XET (32.0, 16.0, 14.4, 12.8, 9.6, 6.4, 4.8, 3.2, 1.6, and 0.8 units) at 30 °C for 40 min. At that time, the reaction mixtures were treated exactly as described in Example 13b. Using this procedure, it was found that 0.042, 0.038, 0.038, 0.037, 0.034, 0.031, 0.027, 0.022, 0.015, and 0.009 mg XGO-FITC were incorporated to the reducing end of xyloglucan, in the samples containing 32.0, 16.0, 14.4, 12.8, 9.6, 6.4, 4.8, 3.2, 1.6, and 0.8 units of XET enzyme, respectively. The results are plotted in Figure 6.

EXAMPLE 15

**Adsorption of sulforhodamine-modified xyloglucans onto cellulose materials**

Cellulosic materials (0.1 g Munktell filter paper strip) were immersed in the solution containing rhodamine-modified XG (4 ml, produced according to the method in Example 10) and agitated in an end-over-end mixer overnight (ca. 15 hours) at room temperature. Binding of XG on the cellulosic fibres (11.4 mg XG / g cellulose) was analyzed by the loss of XG from solution, as determined by the colorimetric method of Kooiman. The cellulosic material was then removed from the original solution and washed repeatedly with ultrapure water in an end-over-end mixer to remove excess XGO-rhodamine. Following extensive washing, the adsorption of rhodamine-XG on cellulose was also observed as a bright pink coloration under ambient light and strong fluorescence under UV light. Control samples treated under identical conditions, but which contained only unmodified xyloglucan and XGO-SR were colorless after washing.

Example 16

**XET mediated incorporation of chemically-modified xyloglucan oligosaccharides into xyloglucan pre-adsorbed on cellulose fibres**

XG (0.5 mg/ml) was incubated with cellulosic fibres overnight (15 hr, gentle end-over-end mixing) to first adsorb XG onto the cellulose. The XG-cellulose was then treated with a mixture of XGO-rhodamine (0.1 mg/ml) and XET (0.025 mg/ml) in the buffer of 50 mM ammonium acetate, pH 5.5. After mixing in an end-over-end mixer at room temperature for 4 hours, the sample was washed extensively with ultrapure water. The covalent incorporation of the fluorescent oligosaccharides was evidenced by a strong pink colour on the cellulose fibres, which also showed strong fluorescence under UV light.

EXAMPLE 17

**Adsorption of fluorescein-modified xyloglucan (XG-FITC) onto cellulosic paper**

a. A mixture (4 ml total volume) of xyloglucan (XG, 0.5 mg/ml), XGO-FITC (0.5 mg/ml) and XET (0.025 mg/ml) in ammonium acetate buffer (25 mM, pH 5.5) was incubated at room temperature (22°C) for 10 min. The reaction was terminated by eluting the reaction mixture through a HiTrap SP FF Column (Amersham Biosciences, Sweden) to remove the XET enzyme. Cellulosic materials (0.1g Whatman No. 1 filter paper strip) were subsequently immersed in the solution and agitated in an end-over-end mixer for 15 hours at room temperature. Binding of XG on the cellulosic fibres (12.6 mg XG/g cellulose) was analyzed by the loss of XG from solution, as determined by the colorimetric method of Kooiman. The cellulosic material was then removed from the original solution and washed repeatedly with ultrapure water in and end-over-end mixer to remove excess XGO-FITC. The adsorption of XG-FITC on cellulose was observed as a bright yellow coloration under ambient light and strong fluorescence under UV light. Control samples to which no XET enzyme had been added to the XG/XGO-FITC solution were colorless and not fluorescent.

b. A mixture (200 μL) of xyloglucan (XG, 1 mg/ml), XGO-FITC (0.5 mg/ml) and XET (8 units) in citrate buffer (20mM, pH 5.5) was incubated at 30 °C for 60 min. The reaction was terminated by heating at 75 °C for 5 min. 100 μL of this solution was diluted to 500 μL in ultrapure water, and cellulosic material (Whatman No. 1 filter paper disc, diameter 1.5 cm, 15.4 mg) was immersed in the solution followed by agitation in an end-over-end mixer for 15 hours at room temperature. The filter paper was then removed and washed with ultrapure water (2 x 1ml). The amount of the XGO-FITC which was incorporated into XG and subsequently bound to the filter paper (0.0232 mg) was analyzed by the loss of XGO-FITC from solution (including the wash solutions), as determined by UV adsorption at 495 nm in 0.1M sodium bicarbonate versus a standard line of XGO-FITC. To directly quantitate the amount of FITC modified xyloglucan (XG-FITC) on the paper surface, the paper was imaged both with a CCD camera during fluorescent excitation (Fujifilm imager) and a desktop scanner. It was found that when scanned in full-color RGB mode, the intensity of the blue channel showed a linear correlation with the amount of XG-FITC adsorbed on the paper. Furthermore, bound XG-FITC could be extracted from the paper with aqueous 2M NaOH and subsequently quantitated by UV adsorption at 495nm in 0.1M sodium bicarbonate. Treatment of XG-FITC with 2M NaOH was shown to have no effect on the UV absorbance or fluorescence emission and excitation spectra of the compound. Confocal microscopy images showed that the fluorophore was specifically localized on the fibre surfaces and demonstrates that the signal is clearly detectable in spite of the porosity of the material.

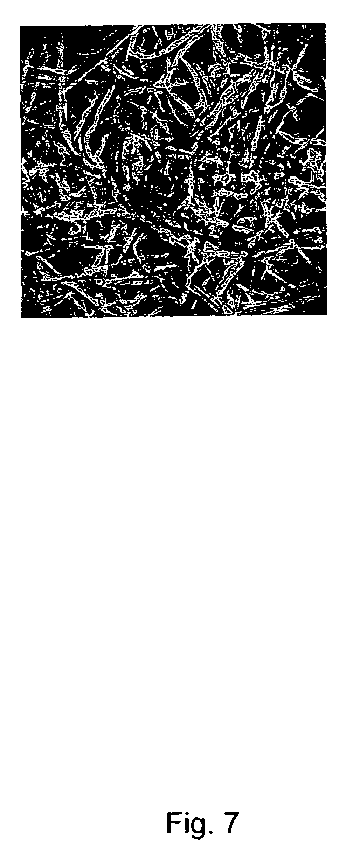

A confocal fluorescence microscopy image of XG-FITC-treated paper is shown in Figure 7. The light areas indicate high relative fluorescence intensity and darker areas indicate a lower relative fluorescence intensity.

EXAMPLE 18

**Adsorption of sulforhodamine-modified (XG-SR) and fluorescein-modified xyloglucan (XG-FITC) onto regenerated cellulose membranes**

a. Cellulose regenerated membranes (0.05g) were immersed into a solution containing sulforhodamine-modified XG (XG-SR, 4 ml, produced according to the method in Example 13) and agitated in an end-over-end mixer for 15 hours at room temperature. Binding of the XG-SR to regenerated cellulose membrane was determined by the loss of XG-SR from solution to be 0.3 mg/g, using the colorimetric method of Kooiman. The cellulosic material was then removed from the original solution and washed repeatedly with ultrapure water in and end-over-end mixer to remove the excess XGO-rhodamine. The adsorption of XG-rhodamine on cellulose was observed as a bright pink coloration under ambient light and strong fluorescence under UV light. Confocal fluorescence microscopy indicated that XG-SR was localised to the membrane surfaces.

b. A mixture (200 $\mu$L) of xyloglucan (XG, 1 mg/ml), XGO-FITC (0.5 mg/ml) and XET (2 $\mu$g) in citrate buffer (20mM, pH 5.5) was incubated at 30 °C for 40 min. The reaction was terminated by heating at 75 °C for 5 min. Regenerated cellulose membranes (0.05g) were immersed in the solution. The amount of the XGO-FITC, which incorporated to XG and subsequently bound to the membrane was analyzed by the loss of XGO-FITC from solutions (including wash solutions), as determined by UV adsorption at 495 nm in 0.1M sodium bicarbonate against standard line of XGO-FITC. Confocal fluorescence microscopy indicated that XG-FITC was bound exclusively to the membrane surfaces.

EXAMPLE 19

**Preparation of amino-modified xyloglucan (XG-NH$_2$)**

A typically reaction consisting of 10 mg of *Tamarindus indica* xyloglucan, 3.75 mg or amino-modified xyloglucan oligosaccharides (mixture of XXXG-NH$_2$, XLXG-NH$_2$, XXLG-NH$_2$, XLLG-NH$_2$, prepared according to Example 8) and 182 units XET (49 $\mu$g protein, Bradford assay) were incubated in 20 mM citrate buffer pH 5.5 for 30 minutes at 30 °C. The enzyme was deactivated by heating to 75°C for ten minutes. The colorimetric assay of Sulová et al. (1995) *Anal. Biochem.* **229**, 80-85, typically showed a change of 0.4 adsorbance units at 620 nm after incubation, comparable to that observed when XGO-FITC was used as a substrate under similar conditions.

EXAMPLE 20

**Adsorption of amino-modified xyloglucan (XG-NH$_2$) onto cellulosic paper**

Amino-modified xyloglucan (XG-NH$_2$, prepared as described in Example 19) was diluted 1:1 with water and incubated with a sheet of filter paper (Whatman No. 1, 1.5 cm diameter, 15 mg) in a glass vial overnight at room temperature with orbital shaking. The papers was washed extensively with ultrapure water. Typically 70 to 80% of the amino-modified xyloglucan was adsorbed to the paper, as determined by the colorimetric method of Kooiman. The content of amino groups on the paper was quantified with ninhydrin as described by Sarin et al. (1981) *Anal. Biochem.,*

**117,** 147-157, which gave typically 70-80 nmol of detected amino groups per sheet of paper.

EXAMPLE 21

**Reaction of amino-modified xyloglucan (XG-NH$_2$) adsorbed on the surface of cellulosic paper with fluorescein isothiocyanate**

Cellulosic paper (Whatman No. 1, 1.5 cm diameter, 15 mg) which had been prepared as described in Example 20 was incubated with fluorescein isothiocyanate, isomer I, (0.6mg) in 500 μL 0.1 M NaHCO$_3$ overnight at room temperature in glass vials with orbital shaking. The paper was washed extensively with 0.1 M NaHCO$_3$ and ultrapure water. Paper treated in this manner appeared bright yellow under ambient light and exhibited strong fluorescence. The degree of modification was quantitated as outlined in Example 17b. Control samples of paper treated in the same manner but to which no XG-NH$_2$ had been added were colorless and showed no fluorescence.

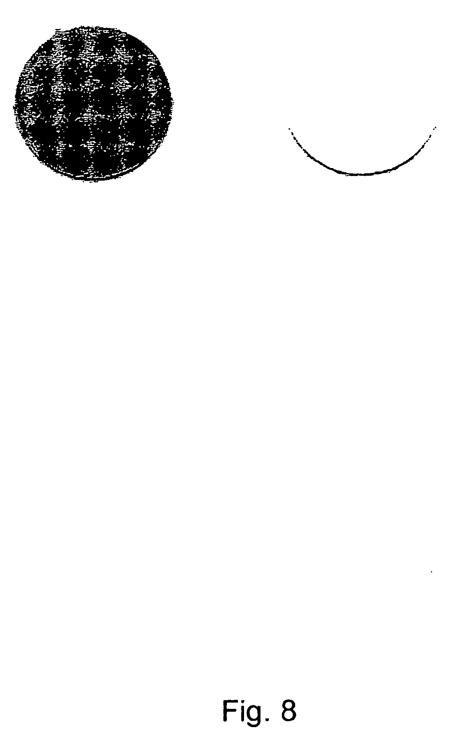

A photo of the result of incorporation of fluorescein into paper treated with XG-NH$_2$ and reacted with FITC is shown in Figure 8. The left filter disc, darker was reacted with FITC whereas the right filter disc was treated identically to the left, except that no XG-NH$_2$ was bound prior to reaction with FITC. From Figure 8 it is clear that the FITC is bound to the filter disc.

EXAMPLE 22

**Reaction of amino-modified xyloglucan (XG-NH$_2$) adsorbed on the surface of cellulosic paper with acetic anhydride**

Cellulosic paper (Whatman No. 1, 1.5 cm diameter, 15 mg) which had been prepared as described in Example 20 was incubated with 3.75 mM acetic anhydride and 11 mM triethylamine in 2 ml anhydrous methanol overnight at room temperature in glass vials with orbital shaking. The paper was then washed with methanol followed by an excess of water. The amount of amino groups detected by the quantitative ninhydrin assay [Sarin et al. (1981) *Anal. Biochem.,* **117,** 147-157] decreased by 84% compared to a control sample. Acetylated paper produced in this manner was also reacted with fluorescein isothiocyanate by the manner outlined in Example 20 and quantitated according to Example 17b indicated that 100% of the amino groups had reacted versus an unmodified amino-paper control.

EXAMPLE 23

**Reaction of amino-modified xyloglucan (XG-NH$_2$) adsorbed on the surface of cellulosic paper with phenylisocyanate**

Cellulosic paper (Whatman No. 1, 1.5 cm diameter, 15 mg) which had been prepared as described in Example 20 was incubated with a 1 M solution of phenylisocyanate in methanol (2 ml) overnight at room temperature in glass vials with orbital shaking. The paper was then washed with methanol (3 x 5 ml, in vials) followed by an excess (1 L, on a glass frit) of water. The amount of amino groups detected by the quantitative ninhydrin assay [Sarin et al. (1981) *Anal. Biochem.,* **117,** 147-157] decreased by 70% compared to a control sample. Paper produced in this manner was also reacted with fluorescein isothiocyanate by the manner outlined in Example 21 and quantitated according to Example 17b indicated that 64% of the amino groups had reacted versus an unmodified amino-paper control.

EXAMPLE 24

**Reaction of amino-modified xyloglucan (XG-NH$_2$) adsorbed on the surface of cellulosic paper with alkenyl succinic anhydride (ASA) in dimethylsulfoxide (DMSO)**

Cellulosic paper (Whatman No. 1, 1.5 cm diameter, 15 mg) which had been prepared as described in Example 20 was incubated with a 4 mM solution of ASA in DMSO (2 ml) overnight at room temperature in glass vials with orbital shaking. The paper was washed two times with 10 ml 2-propanol, two times with 10 ml methanol, and two times with 10 ml of water in the vial and finally washed with 1 L of purified water on a glass fritt. The amount of detected amino groups decreased by 63% compared to a untreated control sample. Paper produced in this manner was also reacted with fluorescein isothiocyanate by the manner outlined in Example 21 and quantitated according to Example 17b indicated that 63% of the amino groups had reacted versus an unmodified amino-paper control.

EXAMPLE 25

**Reaction of amino-modified xyloglucan (XG-NH2) adsorbed with on the surface of cellulosic paper with succinic acid anhydride in methanol (MeOH)**

Cellulosic paper (Whatman No. 1, 1.5 cm diameter, 15 mg) which had been prepared as described in Example 20 was incubated with a 1.5 M solution of succinic acid anhydrite in anhydrous MeOH (2 ml) overnight at room temperature in glass vials with orbital shaking. The paper was washed two times with 10 ml methanol, two times with 10 ml of purified water in the vial and finally washed with 1 l of purified water on a glass frit. The amount of detected amino groups decreased by 48% compared to a untreated control sample. Paper produced in this manner was also reacted with fluorescein isothiocyanate by the manner outlined in Example 21 and quantitated according to Example 17b indicated that 38% of the amino groups had reacted versus an unmodified amino-paper control.

EXAMPLE 26

**Reaction of amino-modified xyloglucan (XG-NH$_2$) adsorbed on the surface of cellulosic paper with N-cinnamoyl imidazole**

Cellulosic paper (Whatman No. 1, 1.5 cm diameter, 15 mg), which had been prepared as described in Example 20, was incubated with 1 M N-cinnamoyl imidazole in dimethylsulfoxide (2 ml) overnight at room temperature in glass vials with orbital shaking. The paper was then washed with 2-propanol (2 x 5ml), methanol (2 x 5ml), and an excess of water (1 L). The amount of amino groups detected by the quantitative ninhydrin assay [Sarin et al. (1981) *Anal. Biochem.,* **117,** 147-157] decreased by 65% compared to a control sample. Paper produced in this manner was also reacted with fluorescein isothiocyanate by the manner outlined in Example 21 and quantitated according to Example 17b indicated that 84% of the amino groups had reacted versus an unmodified amino-paper control.

EXAMPLE 27

**Reaction of amino-modified xyloglucan (XG-NH$_2$) adsorbed on the surface of cellulosic paper with bromo isobutyric acid**

Cellulosic paper (Whatman No. 1, 1.5 cm diameter, 15 mg) which had been prepared as described in Example 20 was incubated with a solution containing 1 M bromo isobutyric acid and 1 M 1-Ethyl-3-(3-dimethylaminopropyl) carbodiimide in MeOH (2 ml) overnight at room temperature in glass vials with orbital shaking. The paper was washed with methanol (2 x 10 ml) and ultrapure water (2 x 10 ml) in the vial and finally washed with 1 L of ultrapure water on a glass fritt. The amount of detected amino groups by 50% compared to a untreated control sample. Paper produced in this manner was also reacted with fluorescein isothiocyanate by the manner outlined in Example 21 and quantitated according to Example 17b indicated that 79% of the amino groups had reacted versus an unmodified amino-paper control.

EXAMPLE 28

**Reaction of amino-modified xyloglucan (XG-NH$_2$) adsorbed on the surface of cellulosic paper with biotin 3-sulfo-N-hydroxycuccinimide ester (succinimidyl biotin)**

Cellulosic paper (Whatman No. 1, 1.5 cm diameter, 15 mg), which had been prepared as described in Example 20, was incubated with a solution containing 180 $\mu$M solution of succinimidyl biotin in 10 mM NaHCO$_3$ (2 ml) overnight at room temperature in glass vials with orbital shaking. The paper was washed four times with 10 ml of purified water in the vial and finally washed with 1 L of purified water on a glass fritt. The amount of detected amino groups decreased by 71% compared to a untreated control sample. Paper produced in this manner was also reacted with fluorescein isothiocyanate by the manner outlined in Example 21 and quantitated according to Example 17b indicated that 57% of the amino groups had reacted versus an unmodified amino-paper control.
The biotinylated paper and a control sample were incubated over night with 500 $\mu$L of a 0.1% BSA solution with end over end shaking to block non-specific protein binding to the paper. The paper was washed two times with 1 ml of water and incubated with 10 $\mu$g streptavidin-alkaline phosphatase conjugate in 100 mM Tris, pH 9.5, for 15 min at room temperature. The paper was washed 4 times with 1 ml of the same Tris buffer. The paper was then incubated with 18 $\mu$g 5-bromo-4-chloro-3-indolylphosphate/nitro blue (BCIP/NBT) in 320 $\mu$L Tris buffer pH 9.5 for 5 min. The paper was subsequently washed with two times with 20 $\mu$L purified water and dried. The paper was subjected to image analysis after scanning on a desktop image scanner. The visibly blue paper was 40% more colored than the control, non-biotinylated amino paper.

EXAMPLE 29

**Reaction of amino-modified xyloglucan (XG-NH$_2$) adsorbed on the surface of cellulosic paper with $\gamma$-thiobutyrolactone**

Cellulosic paper (Whatman No. 1, 1.5 cm diameter, 15 mg) which had been prepared as described in Example 20 was reacted with rthiobutyrolactone (87 $\mu$l, 1mol) in a mixture of ethanol (98%, 500$\mu$l) and sodium bicarbonate aqueous solution (0.1 M, 500$\mu$l) overnight at room temperature in glass vials with orbital shaking. The paper was washed 2 times with 5 ml 0.1 M sodium bicarbonate aqueous solution and finally with approximately 1 L pure water. The amount of detected amino groups decreased by 52% compared to an untreated control sample.,

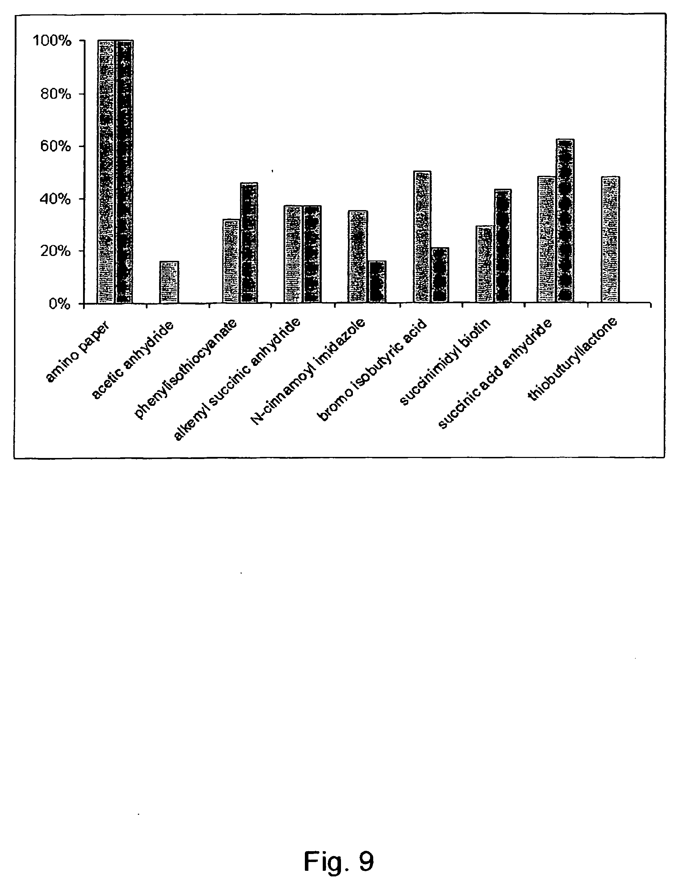

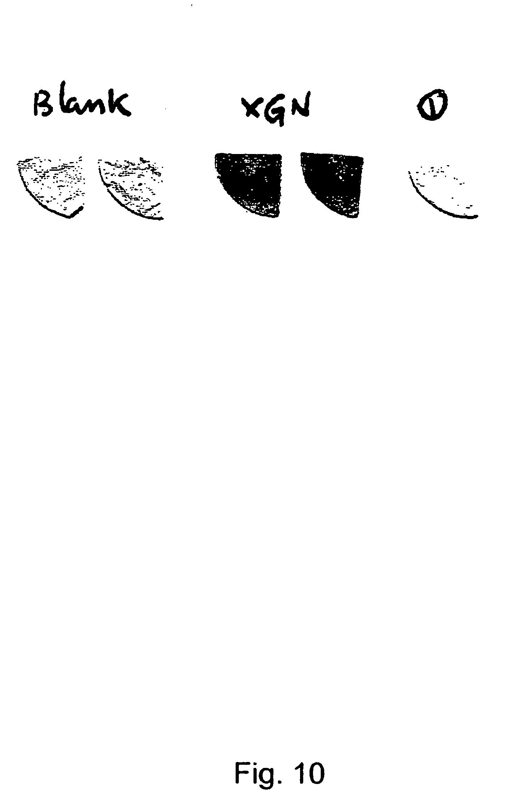

Figure 9 shows the relative amounts of amino groups present on the surface of XG-NH$_2$-modified cellulosic paper following treatment with various amino-reactive reagents. Light grey bars relates to determination by quantitative ninhydrin assay whereas dark grey bars relates to quantiation by reaction with FITC followed by quantitative image analysis. Figure 10 shows the reactivity of paper with and without modification by XG-NH$_2$ toward FITC. "Blank" is commercial filter paper treated with FITC; "XGN" is commercial filter paper treated with XG-NH$_2$ followed by FITC; "1" is commercial filter paper treated with XG-NH$_2$ followed by acetic anhydride, then FITC.

EXAMPLE 30

**Reaction of Sulfo-rhodamine methanethiosulfonate with the thiol groups introduced onto the surface of cellulosic paper**

Half of the dry cellulosic paper (7.7 mg), which was produced as described in Example 29, was treated with 2 ml of 10 mM dithiothreitol (DTT) in 0.1 M NaHCO$_3$ aqueous solution under argon in a glass vial for 2 hours with occasional shaking. After the paper was washed 3 times with 2 ml degassed ultrapure water under argon, 1 ml of 1mM sulforhodamine methanethiosulfonate in a solution of DMSO/H$_2$O (1:9) was added and allowed to react for 2 hours with occasional shaking. The paper was washed with DMSO to remove the unreacted sulfo-rhodamine methanethiosulfonate, washed with ultrapure water, and dried.
The paper exhibited a bright pink coloration under ambient light and a strong fluorescence under UV light, while the blank paper treated in the same way was colorless. Half of the pink paper (ca. 3 mg) was treated with 500 $\mu$L of 10 mM dithiothreitol (DTT) in 0.1 M NaHCO$_3$ aqueous solution again to release the disulfide-bonded sulfo-rhodamine methanethiosulfonate from the paper surface. The supernatant solution was quantitated by UV adsorption at 565 nm. The paper was washed 3 times with 1 ml degassed water under argon and reacted again with 1 ml of 1mM sulforhodamine methanethiosulfonate in a solution of DMSO/H$_2$O (1:9) mixture for 2 hours with occasional shaking. After washing with DMSO and water, the paper again exhibited a bright pink coloration under ambient light and a strong fluorescence under UV light, while the blank paper treated in an identical manner was colorless.

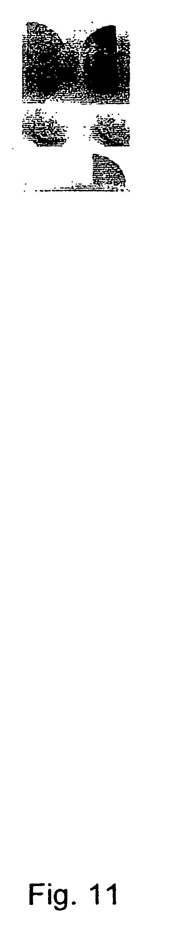

Figure 11 shows the result of reaction of thiolated paper with sulforhodamine methanethiosulfonate. Samples on the left in each row represent XG-NH$_2$-treated paper, while those on the right represent XG-NH$_2$-treated paper, which was subsequently reaction with thiobutyrolactone to introduce a thiol (-SH) group. Top row: samples after treatment with sulforhodamine methanethiosulfonate. Middle row: portions of samples from the top row after washing with DTT solution. Bottom row: DTT washed samples, which were reacted again with sulforhodamine methanethiosulfonate.

EXAMPLE 31

**Atom transfer radical polymerization using initiator coupler with XG on the cellulosic surface**

Atom transfer radical polymerization from cellulose paper surfaces at ambient temperatures has been described [Carlmark and Malmström, 2002, *J. Am. Chem. Soc.* **124**: 900-901], however at high loading amounts of initiator, paper integrity is severely compromised. We carried out the same polymerization reaction from initiator immobilized on the cellulose surface via xyloglucan as described in Example 27, a procedure which gave high levels of initiator on the paper surface with no degradation of paper structure. The graft copolymer so produced showed dramatically increased fibre-polymer bonding compared to control samples where initiator was not coupled onto the fibre surface.
Although the invention has been described with regard to its preferred embodiments, which constitute the best mode presently known to the inventors, it should be understood that various changes and modifications as would be obvious to one having the ordinary skill in this art may be made without departing from the scope of the invention as set forth in the claims appended hereto.

## Claims

1. A method of modifying a polymeric carbohydrate material (PCM), the method comprising a step of binding a chemical group having a desired functionality to said carbohydrate material by means of a carbohydrate linker molecule (CLM) comprising the chemical group and a soluble carbohydrate polymer (SCP) which comprises a hemicellulose, said linker molecule being capable of binding to the PCM.

2. The method of claim 1 wherein the PCM to be modified is derived from a plant selected from the group consisting of a monocotyledonous plant and a dicotyledonous plant.

3. The method of claim 2 wherein the monocotyledonous plant is a plant of the family *Gramineae.*

4. The method of claim 2 wherein the dicotyledonous plant is selected from the group consisting of angiospermous plants (hardwoods), coniferous plants (softwoods) and plants belonging to the *Gossypium* family.

5. The method of any of claims 1-4 wherein the PCM in the form of cellulosic plant fibres.

6. The method of any of claims 1-4 wherein the PCM is in the form of cellulosic microfibrils derived from cellulosic plant fibres or from a bacterium.

7. The method according to any of claims 1-6, wherein the SCP is xyloglucan.

8. The method of any of claims 1-7 wherein the chemical group having a desired functionality is selected from the group consisting of an ionic group, a hydrophobic group, an uncharged hydrophilic group, a reactive group, a nucleophile, a polymerisable monomer, a chromophoric group, a fluorophoric group, biotin, a radioactive isotope, a free-radical precursor, a stable free radical moiety, a protein and a protein binding agent.

9. The method of claim 8 wherein the chemical group is an amine group.

10. The method of claim 8 wherein the chemical group is a free radical precursor.

11. The method of claim 8 wherein the chemical group is a stable free radical moiety.

12. The method of any of the preceding claims wherein the chemical group is a monomer for a polymerisation reaction.

13. The method according to any of the preceding claims wherein the chemical group is an initiator of free-radical polymerisation.

14. The method of any of claims 1-13 wherein the obtained modified polymeric carbohydrate material has, relative to the non-modified material, altered surface properties.

15. The method of any of claims 1-14 wherein the obtained modified polymeric carbohydrate material has, relative to the non-modified material, altered strength properties.

16. The method of any of claims 1-15 wherein the obtained modified polymeric carbohydrate material has, relative to the non-modified material, altered water repellence properties.

17. A modified polymeric carbohydrate material (mPCM) obtainable by the method of any of claims 1-16, the material having bound thereto chemical groups having a desired functionality, said binding is mediated by a carbohydrate linker molecule comprising a chemical group and an SCP which is a hemicellulose, which carbohydrate linker molecule_is capable of binding to the PCM.

18. The material of claim 17 which is in the form of cellulosic plant fibres or cellulosic microfibrils derived from cellulosic plant fibres or from a bacterium.

19. The material of claim 17 or 18 where the chemical groups are reactive groups capable of binding other functional groups.

20. The material of any of claims 17-19 having bound thereto two or more different types of chemical groups.

21. The material according to any of the claims 17-20 wherein the chemical group is selected from the group consisting of a free radical precursor,a stable free radical moiety, a monomer for a polymerisation reaction and an initiator of free-radical polymerisation.

22. A composite material comprising the material of any of claims 17-21.

23. A cellulose-based grafted polymer material obtainable by polymerisation reaction of a material of claim 22.

24. Use of the material of any of claims 17-23 in manufacturing of paper and cardboard product.

25. Use of the material of any of claims 17-23 as an auxiliary agent in a diagnostic or chemical assay or process.

26. Use of the cellulose-based grafted polymer material of claim 23 in the manufacturing of paper sheets, corrugated cardboard, woven fabrics, auxiliary agents in a diagnostic or chemical assay or process, packaging agents for liquids and foodstuffs, paper and cardboards, textiles, security papers, bank notes, traceable documents fillers, laminates, panel products, wood-polymer composites, polymer composites, alloys and blends, or cellulose derivates (cellulosics).

**EP 1 448 840 B1**

**Patentansprüche**

1. Verfahren zur Modifizierung eines polymeren Kohlenhydratmaterials (PCM), wobei das Verfahren einen Bindungsschritt umfasst, wo eine chemische Gruppe mit einer gewünschten Funktionalität an das Kohlenhydratmaterial mit Hilfe eines Kohlenhydrat-Bindemoleküls (CLM) gebunden wird, umfassend die chemische Gruppe und ein lösliches Kohlenhydratpolymer (SCP), das eine Hemizellulose umfasst, welches Bindemolekül an das PCM binden kann.

2. Verfahren nach Anspruch 1, worin das zu modifizierende PCM aus einer Pflanze abgeleitet ist, die aus der Gruppe bestehend aus einer monokotylen Pflanze und einer dikotylen Pflanze ausgewählt ist.

3. Verfahren nach Anspruch 2, worin die monokotyle Pflanze eine Pflanze der Familie *Gramineae* ist.

4. Verfahren nach Anspruch 2, worin die dikotyle Pflanze aus der Gruppe bestehend aus angiospermen Pflanzen (Hartholz), zapfentragenden Pflanzen (Weichholz) und Pflanzen, die der Familie *Gossypium* angehören, ausgewählt ist.

5. Verfahren nach irgendeinem der Ansprüche 1-4, worin das PCM die Form von zellulosehaltigen Pflanzenfasern besitzt.

6. Verfahren nach irgendeinem der Ansprüche 1-4, worin das PCM in Form von zellulosehaitigen Mikrofibrillen vorliegt, die aus zellulosehaltigen Pflanzenfasern oder einer Bakterie abgeleitet sind.

7. Verfahren nach irgendeinem der Ansprüche 1-6, worin das SCP Xyloglucan ist.

8. Verfahren nach irgendeinem der Ansprüche 1-7, worin die chemische Gruppe, die eine gewünschte Funktionalität hat, aus der Gruppe bestehend aus einer ionischen Gruppe, einer hydrophoben Gruppe, einer ungeladenen hydrophoben Gruppe, einer reaktiven Gruppe, einem Nucleophil, einem polymerisierbaren Monomer, einer chromophorischen Gruppe, einer fluorophorischen Gruppe, Biotin, einem radioaktiven Isotop, einem freiradikalen Vorgänger, einer stabilen freiradikalen Gruppe, einem Protein und einem proteinbindenden Mittel ausgewählt ist.

9. Verfahren nach Anspruch 8, worin die chemische Gruppe eine Amingruppe ist.

10. Verfahren nach Anspruch 8, worin die chemische Gruppe eine freiradikale Vorstufe ist.

11. Verfahren nach Anspruch 8, worin die chemische Gruppe eine stabile freiradikale Gruppe ist.

12. Verfahren nach irgendeinem der vorhergehenden Ansprüche, worin die chemische Gruppe ein Monomer für eine Polymerisierungsreaktion ist.

13. Verfahren nach irgendeinem der vorhergehenden Ansprüche, worin die chemische Gruppe ein Initiator von freiradikaler Polymerisierung ist.

14. Verfahren nach irgendeinem der Ansprüche 1-13, worin das erhaltene modifizierte polymere Kohlenhydratmaterial, relativ zum nicht-modifizierten Material, veränderte Obenflächeneigenschaften besitzt.

15. Verfahren nach irgendeinem der Ansprüche 1-14, worin das erhaltene modifizierte polymere Kohlenhydratmaterial, relativ zum nicht-modifizierten Material, veränderte Stärkeeigenschaften besitzt.

16. Verfahren nach irgendeinem der Ansprüche 1-15, worin das erhaltene modifizierte polymere Kohlenhydratmaterial, relativ zum nicht-modifizierten Material, veränderte wasserabstoßende Eigenschaften besitzt.

17. Modifiziertes polymeres Kohlenhydratmaterial (mPCM), das durch das Verfahren nach irgendeinem der Ansprüche 1-16 erhältlich ist, wobei chemische Gruppen mit einer gewünschten Funktionalität an das Material gebunden sind, indem die Bindung durch ein Kohlenhydrat-Bindemolekül vermittelt wird, das eine chemische Gruppe und ein SCP, das Hemizellulose ist, umfasst, welches Kohlenhydrat-Bindemolekül an das PCM binden kann.

18. Material nach Anspruch 17, welches Material in Form von zellulosehaltigen Pflanzenfasern oder zellulosehaltigen Mikrofibrillen, die aus zellulosehaltigen Pflanzenfasern oder aus einer Bakterie abgeleitet sind, vorliegt.

**19.** Material nach Anspruch 17 oder 18, wobei die chemischen Gruppen reaktive Gruppen sind, die andere funktionelle Gruppen binden können.

**20.** Material nach irgendeinem der Ansprüche 17-19, woran zwei oder mehrere verschiedene Typen von chemischen Gruppen gebunden sind.

**21.** Material nach irgendeinem der Ansprüche 17-20, worin die chemische Gruppe aus der Gruppe bestehend aus einer freiradikalen Vorstufe, einer stabilen freiradikalen Gruppe, einem Monomer für eine Polymerisierungsreaktion und einem Initiator für freiradikale Polymerisierung ausgewählt ist.

**22.** Verbundmaterial, das das Material nach irgendeinem der Ansprüche 17-21 umfasst.

**23.** Zellulosebasiertes gepfropftes Polymermaterial, das durch Polymerisierungsreaktion eines Materials nach Anspruch 22 erhältlich ist.

**24.** Anwendung des Materials nach irgendeinem der Ansprüche 17-23 zur Herstellung von Papier und Kartonprodukt.

**25.** Anwendung des Materials nach irgendeinem der Ansprüche 17-23 als ein Hilfsmittel in einem diagnostischen oder chemischen Assay oder Verfahren.

**26.** Anwendung des zellulosebasierten gepfropften Polymermaterials nach Anspruch 23 in der Herstellung von Papierblättern, gewölbtem Karton, Gewebe, Hilfsmitteln in einem diagnostischen oder chemischen Assay oder Verfahren, Verpackungsmitteln für Flüssigkeiten oder Lebensmittel, Papier und Karton, Textilien, Wertpapieren, Banknoten, verfolgbaren Dokumentfüllern, Laminaten, Panelprodukten, holzpolymeren Verbundstoffen, polymeren Verbundstoffen, Legierungen und Mischungen oder Zellulosederivaten (zellulosehaltigen Stoffen).

## Revendications

**1.** Procédé de modification d'un matériau hydrocarboné polymère (PCM), lequel procédé comprend une étape de fixation d'un groupe chimique ayant une fonctionnalité désirée au matériau hydrocarboné à l'aide d'une molécule linker hydrocarboné (CLM) comprenant le groupe chimique et un polymère hydrocarboné soluble (SCP) comprenant une hémicellulose, la molécule linker étant capable de se fixer au PCM.

**2.** Procédé selon la revendication 1, dans lequel le PCM à modifier est dérivé d'une plante choisie dans le groupe constitué d'une plante monocotylédone et une plante dicotylédone.

**3.** Procédé selon la revendication 2, dans lequel la plante monocotylédone est une plante de la famille *Gramineae.*

**4.** Procédé selon la revendication 2, dans lequel la plante dicotylédone est choisie dans le groupe constitué des plantes angiospermes (bois massif), les plantes conifères (bois blanc) et les plantes appartenant à la famille *Gossypium.*

**5.** Procédé selon l'une quelconque des revendications 1 à 4, dans lequel le PCM est sous forme de fibres de plante cellulosiques.

**6.** Procédé selon l'une quelconque des revendications 1 à 4, dans lequel le PCM est sous forme de microfibrilles cellulosiques dérivées de fibres de plantes cellulosiques ou d'une bactérie.

**7.** Procédé selon l'une quelconque des revendications 1 à 6, dans lequel le SCP est le xyloglucane.

**8.** Procédé selon l'une quelconque des revendications 1 à 7, dans lequel le groupe chimique ayant la fonctionnalité désirée est choisi dans le groupe constitué d'un groupe ionique, un groupe hydrophobe, un groupe hydrophile non-chargé, un groupe réactif, un nucléophile, un monomère polymérisable, un groupe chromophore, un groupe fluorophore, un isotope radioactif, un précurseur de radicaux libres, un radical libre stable, une protéine et un agent de fixation de protéine.

**9.** Procédé selon la revendication 8, dans lequel le groupe chimique est un groupe aminé.

**10.** Procédé selon la revendication 8, dans lequel le groupe chimique est un précurseur de radicaux libres.

**11.** Procédé selon la revendication 8, dans lequel le groupe chimique est un radical libre stable.

**12.** Procédé selon l'une quelconque des revendications précédentes, dans lequel le groupe chimique est un monomère pour une réaction de polymérisation.

**13.** Procédé selon l'une quelconque des revendications précédentes, dans lequel le groupe chimique est un initiateur de polymérisation de radicaux libres.

**14.** Procédé selon l'une quelconque des revendications 1 à 13, dans lequel le matériau obtenu de polymère hydrocarboné modifié a des propriétés de surface altérées par rapport au matériau non-modifié.

**15.** Procédé selon l'une quelconque des revendications 1 à 14, dans lequel le matériau obtenu de polymère hydrocarboné modifié a des propriétés de force altérées par rapport au matériau non-modifié.

**16.** Procédé selon l'une quelconque des revendications 1 à 15, dans lequel le matériau obtenu de polymère hydrocarboné modifié a des propriétés hydrophobes altérées par rapport au matériau non-modifié.

**17.** Matériau hydrocarboné polymère modifié (mPCM) qui peut être obtenu par le procédé selon l'une quelconque des revendications 1 à 16, auquel matériau sont fixés des groupes chimiques ayant une fonctionnalité désirée, la fixation étant médiée par une molécule linker hydrocarbonée comprenant un groupe chimique et un SCP qui est une hémicellulose, la molécule linker hydrocarbonée étant capable de se fixer au PCM.

**18.** Matériau selon la revendication 17 sous forme de fibres de plante cellulosiques ou de microfibrilles cellulosiques dérivées de fibres de plantes cellulosiques ou d'une bactérie.

**19.** Matériau selon la revendication 17 ou 18, dans lequel les groupes chimiques sont des groupes réactifs capable de fixer d'autres groupes fonctionnels.

**20.** Matériau selon l'une quelconque des revendications 17 à 19, auquel sont fixés deux ou plusieurs types différents de groupes chimiques.

**21.** Matériau selon l'une quelconque des revendications 17 à 20, dans lequel le groupe chimique est choisi dans le groupe constitué d'un précurseur de radicaux libres, un radical libre stable, un monomère pour une réaction de polymérisation et un initiateur de polymérisation de radicaux libres.

**22.** Matériau composite comprenant le matériau selon l'une quelconque des revendications 17 à 21.

**23.** Matériau polymère greffé à base de cellulose qui peut être obtenu par une réaction de polymérisation d'un matériau selon la revendication 22.

**24.** Utilisation du matériau selon l'une quelconque des revendications 17 à 23 ou du matériau composite dans la production des produits de papier et de carton.

**25.** Utilisation du matériau selon l'une quelconque des revendications 17 à 23 ou du matériau composite comme un agent auxiliaire dans un essai ou un procédé diagnostique ou chimique.

**26.** Utilisation du matériau polymère greffé à base de cellulose selon la revendication 23 dans la fabrication des feuilles de papier, le carton ondulé, les tissus tissés, les agents auxiliaires dans un essai ou procédé diagnostique ou chimique, les agents d'emballage pour les liquides et les denrées alimentaires, le papier et le carton, les textiles, les papiers de sécurité, les billets de banque, les charges de document détectables, les produits laminés, les produits à panneaux, les composites polymères boisés, les composites polymères, les alliages et les mélanges ou les dérivés cellulosiques (dérivés de cellulose).

Fig. 1

Fig. 2

Fig. 3

Fig. 4

Fig. 5

Fig. 6

Fig. 7

Fig. 8

Fig. 9

Fig. 10

Fig. 11

SEQUENCE LISTING

<110> SWETREEGENOMICS AB TEERI, Tuula T. BRUMER, Harry

<120> Enzymatic method for the modification of polymeric carbo hydrate materials

<130> MH 47344

<160> 3

<170> Patent In version 3.1

<210> 1
<211> 885
<212> DNA
<213> Brassica oleracea

<400> 1

```
atggctgttt cttcaactcc gtgggctctc gtagctctgt ttctgatggc ctcttcta
ct       60

gtaatggcaa ttcctccacg gaaagccatt gatgtgccat tcggccgaaa ctacgtcc
ca      120

acttgggctt ttgaccacca gaagcaactc aatggcggtt ccgaactcca actcatcc
tc      180

gacaaataca ctgggacagg gtttcaatcg aaagggtcgt atttgttcgg acatttca
gt      240

atgcacataa agctgccagc tggtgatacc gctggggtcg tcactgcatt ttatctgt
cg      300

tcgactaaca acgagcatga cgagatagat ttcgagtttc tcgggaacag gacaggcc
ag      360

ccagtaatat tgcagaccaa tgtattcaca ggaggaaagg gaaacagaga gcaacgca
tc      420

tatctctggt tcgacccttc aaaggcttat catacttact ccgtcctctg gaatctct
ac      480

caaattgtat tctttgttga caacatacca atccgtgtgt tcaagaacgc taaggatc
```

```
ta        540

ggagtacgtt tcccattcaa ccaaccgatg aagctatact cgagcctttg gaacgctg
ac        600

gattgggcca cgagaggagg gctagagaaa accaattggg ctaatgcacc cttcatag
ct        660

tcctacagag gattccacat cgacggctgc caagcttctg tggaggccaa gtactgtg
ct        720

acccaaggcc gcatgtggtg ggatcagaat gagttccgtg atcttgatgc cgaacaat
at        780

cgtcgcctca aatgggtccg catgaaatgg accatctaca actactgtac cgaccgta
ca        840

aggttcccag ttatgccagc cgaatgtaga agggacagag acgtg
          885
```

<210> 2
<211> 888
<212> DNA
<213> Populous tremula x tremuloides Mich.

<400> 2

```
atggctgttt cagtctttaa gatggtgggt ttctttgttg gtttctttct aattgtgg
gt        60

ttggttagtt cagctaagtt tgacgagctc tttcaaccaa gttgggctct tgatcact
tt        120

gcttatgaag gagagcttct caggctcaag cttgataatt attctggtgc tggatttc
aa        180

tccaaaagca agtatatgtt tggaaaagta acagtacaaa taaagcttgt agagggtg
at        240

tctgctggaa ctgttactgc tttctatatg tcatctgagg gtccatacca caacgagt
tt        300

gattttgagt ttcttggcaa caccacagga gaaccttact tggttcaaac caatgtat
tt        360

gttaatggcg taggtcacaa agaacaaaga ctgaaccttt ggtttgaccc taccaagg
```

at        420

ttccattctt actccttact ttggaaccag cgccaagttg tgtttctagt ggacgaga
cc        480

ccaattagat tgcataccaa tatggaaaac aaaggaattc cttttccaaa ggaccaag
cc        540

atgggtgtat acagctcaat atggaatgca gatgattggg ctacacaagg tggccgtg
tc        600

aagactgatt ggagtcatgc accctttgtt gcctcctata aaggatttga aattgatg
cg        660

tgtgagtgtc cagtatcagt agctgcagct gataatgcta agaaatgtag cagcagtg
gt        720

gagaaaggt actggtggga tgaacctacg ttgtctgagc tcaatgcgca ccagagcc
at        780

cagcttttgt gggtgaaggc taaccacatg gtctacgact actgcagcga cactgcta
gg        840

ttcccagtca ctcctctaga gtgcctgcac cacagccacc gccaccac
          888

<210> 3
<211> 882
<212> DNA
<213> Populus tremula x tremuloides Mich.

<400> 3

atggctgctg cttatccgtg gactttgttt cttggcatgc tggttatggt atctggaa
ca        60

atgggagctg ccctgaggaa gccagtggat gtggcgttcg gtaggaacta tgttccta
ca        120

tgggcttttg accacattaa gtacttcaat ggaggcaatg agattcagct gcacttgg
at        180

aaatacacag gtactggttt ccaatcaaaa ggttcatact tatttggcca tttcagta
tg        240

caaatgaagt tggttcctgg tgactcagct ggaacagtca ctgctttcta tctatcct

```
ca        300

caaaactcgg agcatgacga gatagacttt gagttcttag gaaacaggac tggccagc
cc        360

tacattttgc agacaaatgt tttcacagga ggcaaggggg atagagaaca gaggattt
ac        420

ctctggtttg acccaaccaa ggaattccac tactattctg tcctctggaa catgtaca
tg        480

atagtgttcc tcgtggatga cgtgccaatc agagtgttca agaactgcaa agatttgg
ga        540

gttaagtttc cattcaacca gccaatgaag atctactcaa gcctatggaa tgccgatg
at        600

tgggctacca ggggtggact cgagaagaca gactggtcca aggcaccgtt cattgcct
cc        660

tacaggagct tccacataga tgggtgcgag gcctccgtgg aagccaagtt ctgcgcca
ca        720

cagggtgcta gatggtggga ccagaaggag ttccaagatc tggatgcctt ccagtaca
gg        780

aggctcagct gggtccgcca gaaatatacc atctacaatt actgcactga tagatcaa
ga        840

tacccttcaa tgcccccaga atgcaagaga gacagagaca ta
          882
```